(19) Europäisches Patentamt / European Patent Office / Office européen des brevets

(11) **EP 4 501 722 A1**

(12) **EUROPEAN PATENT APPLICATION**
published in accordance with Art. 153(4) EPC

(43) Date of publication:
**05.02.2025 Bulletin 2025/06**

(21) Application number: **23779421.9**

(22) Date of filing: **10.03.2023**

(51) International Patent Classification (IPC):
**B60T 13/74** (2006.01)    **B60T 8/00** (2006.01)

(52) Cooperative Patent Classification (CPC):
**B60T 8/00; B60T 13/74**

(86) International application number:
**PCT/JP2023/009214**

(87) International publication number:
**WO 2023/189397 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022052010**

(71) Applicant: **Hitachi Astemo, Ltd.**
**Ibaraki 312-8503 (JP)**

(72) Inventors:
- **TADA, Hirohito**
  **Hitachinaka-shi, Ibaraki 312-8503 (JP)**
- **KIKAWA, Masayuki**
  **Hitachinaka-shi, Ibaraki 312-8503 (JP)**
- **MATSUZAKI, Norikazu**
  **Hitachinaka-shi, Ibaraki 312-8503 (JP)**
- **SAOTOME, Suguru**
  **Hitachinaka-shi, Ibaraki 312-8503 (JP)**

(74) Representative: **Hoffmann Eitle**
**Patent- und Rechtsanwälte PartmbB**
**Arabellastraße 30**
**81925 München (DE)**

(54) **ELECTRIC BRAKE DEVICE, ELECTRIC BRAKE CONTROL METHOD, AND CONTROL DEVICE**

(57) A parking brake control apparatus controls an electric motor based on an "estimated thrust force (stroke)" acquired from a "stroke" corresponding to an electric motor rotational amount acquired based on a current value and a voltage value supplied to the electric motor and a "pad stiffness learned value (more specifically, pad stiffness after a temperature characteristic is taken into consideration)", which is an element regarding stiffness including stiffness of brake pads, when the current value changes according to a change in the voltage value applied to the electric motor.

FIG. 4

EP 4 501 722 A1

**Description**

TECHNICAL FIELD

The present disclosure relates to an electric brake apparatus, an electric brake control method, and a control apparatus.

BACKGROUND ART

PTL 1 discloses a brake apparatus that estimates the efficiency when calculating a thrust force based on a current using a voltage detected when power supply to a rotational mechanism is stopped after an application operation.

CITATION LIST

PATENT LITERATURE

PTL 1: Japanese Patent Application Laid-Open No. 2020-050073

SUMMARY OF INVENTION

TECHNICAL PROBLEM

The brake apparatus disclosed in PTL 1 does not take the voltage into consideration to calculate the estimated thrust force. On the other hand, a voltage supplied to an electric motor of an electric brake increases, for example, when an electric load such as an air conditioner is turned off or the vehicle recovers from cranking (when power supply to an engine startup motor is stopped). At this time, the current also increases and the estimated thrust force also increases. However, a torque generated in correspondence with this increase in the current is consumed as a speed-up of the rotational speed of the electric motor, and therefore does not contribute to an increase in an actual thrust force.

For this reason, in the case of the conventional technique, the estimated thrust force may increase although the actual thrust force does not increase, and the brake apparatus may determine that the application is completed due to the arrival of this estimated thrust force at a target thrust force and stop driving the electric motor. In other words, the brake apparatus may end up completing the application operation in a state that the thrust force may be insufficient without the actual thrust force reaching the target thrust force yet. As a result, for example, when the vehicle is stopped on an upslope road, the thrust force (the braking force) based on the driving of the electric motor may fall short, and the vehicle may slip down.

One of objects of the present invention is to provide an electric brake apparatus, an electric brake control method, and a control apparatus capable of preventing a thrust force from falling short even when a current changes due to a change in a voltage.

SOLUTION TO PROBLEM

According to one aspect of the present invention, an electric brake apparatus includes an electric mechanism configured to transmit a thrust force to a braking member in a direction toward a braking target member to provide a braking force, and hold the thrust force, an electric motor configured to transmit the thrust force to the electric mechanism, and a control apparatus configured to control the electric motor. The control apparatus controls the electric motor based on a first estimated thrust force acquired from a first physical amount corresponding to an electric motor rotational amount acquired based on a current value and a voltage value supplied to the electric motor and an element regarding stiffness including stiffness of the braking member, when the current value changes according to a change in the voltage value applied to the electric motor.

Another aspect of the present invention is an electric brake control method for controlling an electric motor by detecting a current value of the electric motor configured to provide a thrust force to a braking member. The electric brake control method includes controlling the electric motor based on a first estimated thrust force acquired from a first physical amount corresponding to an electric motor rotational amount acquired based on the current value and a voltage value supplied to the electric motor and an element regarding stiffness including stiffness of the braking member, when the current value changes according to a change in the voltage value applied to the electric motor.

Further another aspect of the present invention is a control apparatus configured to control an electric motor by detecting a current value of the electric motor configured to provide a thrust force to a braking member. The control apparatus controls the electric motor based on a first estimated thrust force acquired from a first physical amount corresponding to an electric motor rotational amount acquired based on the current value and a voltage value supplied to the electric motor and an element regarding stiffness including stiffness of the braking member, when the current value changes according to a change in the voltage value applied to the electric motor.

According to the aspects of the present invention, the thrust force can be prevented from falling short even when the current changes due to the change in the voltage.

BRIEF DESCRIPTION OF DRAWINGS

Fig. 1 is a conceptual diagram of a vehicle on which an electric brake apparatus according to an embodiment is mounted.

Fig. 2 is a vertical cross-sectional view illustrating a hydraulic disk brake equipped with an electric parking brake function that is mounted on a rear wheel side in Fig. 1 in an enlarged manner.

Fig. 3 is a block diagram (a circuit configuration diagram) illustrating a control apparatus in Fig. 1 together with the rear wheel-side disk brake and the like.

Fig. 4 is a block diagram (a control block diagram) illustrating the control apparatus in Fig. 3.

Fig. 5 is a flowchart illustrating processing performed by a "load increase detection portion" in Fig. 4 (load increase detection processing).

Fig. 6 is a flowchart illustrating processing performed by a "current change detection portion" in Fig. 4 (current change detection processing).

Fig. 7 is a flowchart illustrating processing performed by a "current-based estimated thrust force calculation portion" in Fig. 4 (estimated thrust force (current) calculation processing).

Fig. 8 is a flowchart illustrating processing performed by a "stroke calculation portion" in Fig. 4 (stroke calculation processing).

Fig. 9 is a flowchart illustrating processing performed by a "pad temperature estimation portion" in Fig. 4 (pad temperature estimation processing).

Fig. 10 is a flowchart illustrating processing performed by a "pad stiffness learning portion" in Fig. 4 (pad stiffness learning processing).

Fig. 11 is a flowchart illustrating processing performed by a "stroke-based estimated thrust force calculation portion" in Fig. 4 (estimated thrust force (stroke) calculation processing).

Fig. 12 is a flowchart illustrating processing performed by an "application completion determination portion" in Fig. 4 (application completion determination processing).

Fig. 13 is a flowchart illustrating processing performed by a "motor driving signal calculation portion" in Fig. 4 (motor driving signal calculation processing).

Fig. 14 illustrates one example of the relationship between a motor driving signal and an operation of a driving circuit in the form of a list.

Fig. 15 is a characteristic line diagram illustrating one example of a time-series change in a current at the time of application.

Fig. 16 is a characteristic line diagram illustrating one example of time-series changes in a "voltage", the "current", a "thrust force", and a "motor rotational speed" when an increase in the current according to an increase in the voltage is not taken into consideration.

Fig. 17 is a characteristic line diagram illustrating one example of time-series changes in the "voltage", the "current", a "current change detection flag", an "estimated thrust force estimated based on the current", an "estimated thrust force estimated based on a stroke", and an "estimated thrust force to be used to determine application completion" according to the embodiment.

DESCRIPTION OF EMBODIMENTS

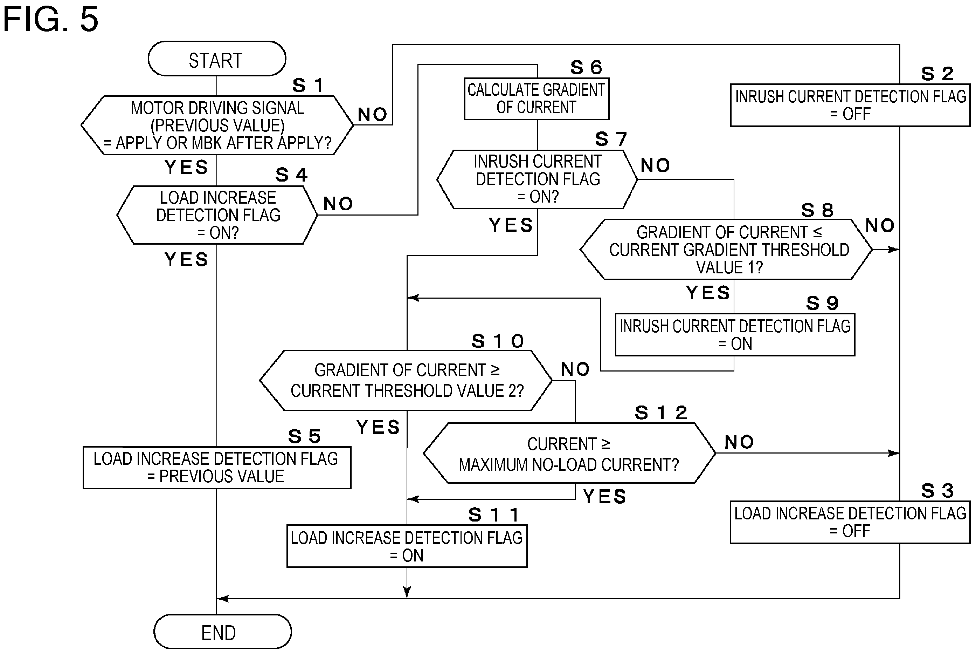

In the following description, an electric brake apparatus according to an embodiment will be described citing an example in which it is mounted on a four-wheeled automobile with reference to the accompanying drawings. Each step in flowcharts illustrated in Figs. 5 to 12 will be represented by the symbol "S" (for example, each step will be indicated like step 1 = "S1").

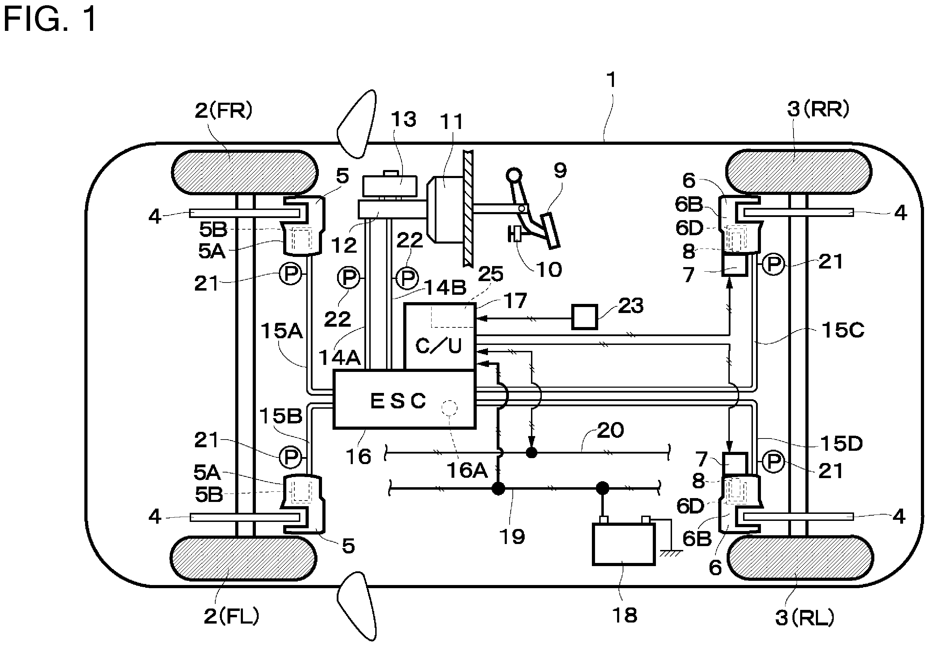

In Fig. 1, four wheels 2 and 3 in total that include, for example, left and right front wheels 2 (FL and FR) and left and right rear wheels 3 (RL and RR) are mounted under a vehicle body 1 forming a main structure of a vehicle (on a road surface side). The wheels 2 and 3 (each of the front wheels 2 and each of the rear wheels 3) constitute the vehicle together with the vehicle body 1. A brake system for providing a braking force is mounted on the vehicle. In the following description, the brake system of the vehicle will be described.

A disk rotor 4 is provided on a portion where each of the front wheels 2 and the rear wheels 3 is mounted. The disk rotor 4 serves as a braking target member (a rotational member) that rotates together with each of the wheels 2 and 3 (each of the front wheels 2 and each of the rear wheels 3). The disk rotor 4 for the front wheel 2 is subjected to a braking force by a front wheel-side disk brake 5, which is a hydraulic disk brake. The disk rotor 4 for the rear wheel 3 is subjected to a braking force by a rear wheel-side disk brake 6, which is a hydraulic disk brake equipped with an electric parking brake function.

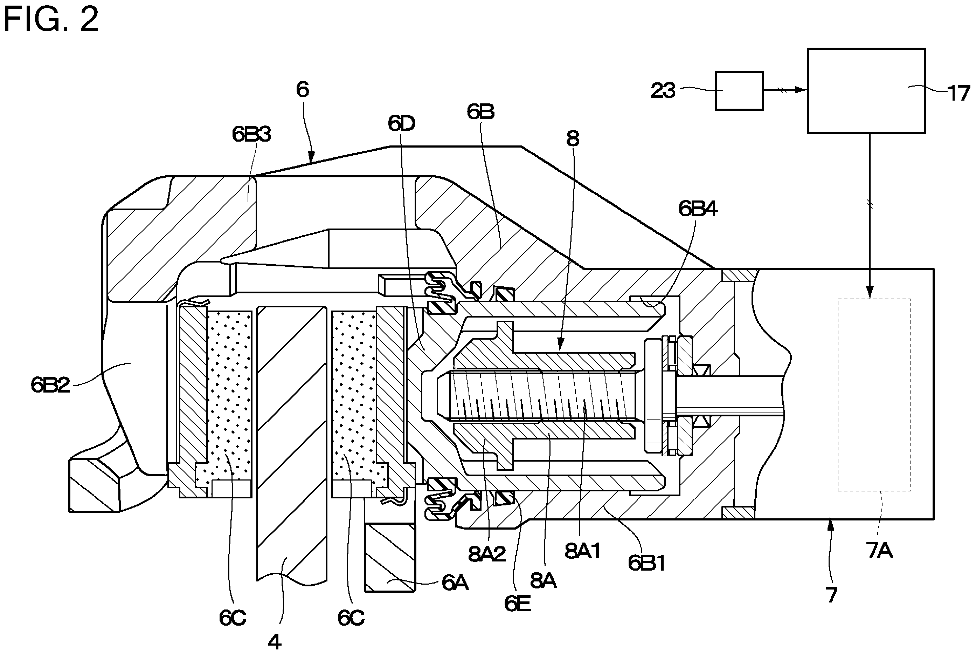

The pair (set) of rear wheel-side disk brakes 6 provided in correspondence with the left and right rear wheels 3, respectively, is each a hydraulic brake mechanism (a hydraulic brake) that provides a braking force by pressing brake pads 6C (refer to Fig. 2) against the disk rotor 4 based on a hydraulic pressure. As illustrated in Fig. 2, each of the rear wheel-side disk brakes 6 includes, for example, a mount member 6A called a carrier, a caliper 6B as a wheel cylinder, the pair of brake pads 6C as a braking member (a frictional member or a frictional pad), and a piston 6D as a pressing member. In this case, the caliper 6B and the piston 6D constitute a hydraulic mechanism (a cylinder mechanism) that causes the piston 6D to be moved by the hydraulic pressure to press the brake pads 6C against the disk rotor 4, thereby providing the braking force to the vehicle.

The mount member 6A is fixed to a non-rotatable portion of the vehicle, and is disposed so as to extend across over the outer peripheral side of the disk rotor 4. The caliper 6B is provided on the mount member 6A movably in the axial direction of the disk 4. The caliper 6B includes a cylinder main body portion 6B1, a claw portion 6B2, and a bridge portion 6B3 connecting them. A cylinder (a cylinder hole) 6B4 is provided in the cylinder main body portion 6B1, and the piston 6D is fittedly inserted in the cylinder 6B4. The brake pads 6C are movably attached to the mount member 6A, and are disposed so as to be able to abut against the disk rotor 4. The piston 6D presses the brake pads 6C against the disk rotor 4.

Then, the caliper 6B thrusts the brake pads 6C by the piston 6D according to supply (addition) of the hydraulic pressure (a brake hydraulic pressure) into the cylinder 6B4 based on an operation on a brake pedal 9 or the like. At this time, the brake pads 6C are pressed against the both surfaces of the disk rotor 4 by the claw portion 6B2 of the caliper 6B and the piston 6D. As a result, the braking force is provided to the rear wheel 3 rotating together with the disk rotor 4.

Further, the rear wheel-side disk brake 6 includes an electric actuator 7 and a rotation-liner motion conversion mechanism 8. The electric actuator 7 includes an electric motor 7A as an electrically-driven motor, and a speed reducer (not illustrated) that slows down the rotation of this electric motor 7A. The electric motor 7A serves as a thrust source (a driving source) for thrusting the piston 6D. The rotation-linear motion conversion mechanism 8 as an electric mechanism constitutes a holding mechanism (a pressing member holding mechanism) that holds the force pressing the brake pads 6C.

In this case, the rotation-linear motion conversion mechanism 8 includes a rotation-linear motion member 8A. The rotation-linear motion member 8A converts a rotation of the electric motor 7A into an axial displacement (a linear displacement) of the piston 6D and also thrusts this piston 6D. The rotation-linear motion member 8A includes, for example, a threaded member 8A1 and a linear motion member 8A2. The threaded member 8A1 is made of an externally threaded rod-like member. The linear motion member 8A2 serves as a thrust member including an internally threaded hole formed on the inner peripheral side thereof. The rotation-linear motion conversion mechanism 8 converts the rotation of the electric motor 7A into the axial displacement of the piston 6D, and also holds the piston 6D thrust by the electric motor 7A. In other words, the rotation-linear motion conversion mechanism 8 provides the thrust force to the piston 6D using the electric motor 7A and thrusts the brake pads 6C by this piston 6D to press the disk rotor 4, and then holds the thrust force on this piston 6D. A screw mechanism or the like capable of holding the pressing state even when power supply to the electric motor 7A is turned off can be used as the rotation-linear motion conversion mechanism 8.

The rotation-linear motion conversion mechanism 8 constitutes the parking brake mechanism (the electric parking brake mechanism) together with the electric motor 7A. The parking brake mechanism converts the rotational force of the electric motor 7A into the thrust force via a speed reducer and the rotation-linear motion conversion mechanism 8 to thrust (displace) the piston 6D, thereby pressing the brake pads 6C against the disk rotor 4 and holding the braking force on the vehicle. The parking brake mechanism (i.e., the electric motor 7A and the rotation-linear motion conversion mechanism 8) constitutes the brake apparatus together with the hydraulic mechanism (i.e., the caliper 6B and the piston 6D) and a braking control apparatus 17, which will be described below. Further, the parking brake mechanism (i.e., the electric motor 7A and the rotation-linear motion conversion mechanism 8) constitutes the electric brake apparatus together with the braking control apparatus 17, which will be described below. The parking brake mechanism holds the braking force using the electric motor 7A. As will be described below, the electric motor 7A is controlled by a control portion (an arithmetic circuit 24) of the braking control apparatus 17.

The rear wheel-side disk brake 6 thrusts the piston 6D using the brake hydraulic pressure generated based on the operation on the brake pedal 9 or the like to press the disk rotor 4 with the brake pads 6C, thereby providing the braking force to the wheel (the rear wheel 3) and thus the vehicle. In addition thereto, the rear wheel-side disk brake 6 thrusts the piston 6D using the electric motor 7A via the rotation-linear motion conversion mechanism 8 according to an actuation request based on a signal from a parking brake switch 23 or the like, thereby providing the braking force (a parking brake or an auxiliary brake while the vehicle runs when necessary) to the vehicle, as will be described below.

In other words, the rear wheel-side disk brake 6 drives the electric motor 7A to thrust the piston 6D by the rotation-linear motion member 8A, thereby pressing the brake pads 6C against the disk rotor 4 and holding them. In this case, the rear wheel-side disk brake 6 thrusts the piston 6D using the electric motor 7A and holds the braking of the vehicle according to a parking brake request signal (an application request signal), which serves as an application request for providing the parking brake (the brake used to park the vehicle). Along therewith, the rear wheel-side disk brake 6 brakes the vehicle based on the supply of the hydraulic pressure from a hydraulic pressure source (a master cylinder 12, which will be described below, or a hydraulic pressure supply apparatus 16 as necessary) according to the operation on the brake pedal 9.

In this manner, the rear wheel-side disk brake 6 includes the rotation-linear motion conversion mechanism 8, which presses the brake pads 6C against the disk rotor 4 by the electric motor 7A and holds the force pressing these brake pads 6C, and is also configured to be able to press the brake pads 6C against the disk rotor 4 by the hydraulic pressure added separately from the pressing by the electric motor 7A. In other words, the rear wheel-side disk brake 6 includes the caliper 6B that generates the braking force by driving the electric motor 7A to press the brake pads 6C against the disk rotor 4 when the vehicle is parked.

On the other hand, the pair (set) of front wheel-side disk brakes 5 provided in correspondence with the left and right front wheels 2, respectively, is configured in an approximately similar manner to the rear wheel-side disk brakes 6, except for the mechanism relating to the operation of the parking brake. More specifically, as illustrated in Fig. 1, each of the front wheel-side disk brakes 5 includes a mount member (not illustrated), a caliper 5A, brake pads (not illustrated), a piston 5B, and the like, but does not include the electric actuator 7 (the electric motor 7A), the rotation-linear motion conversion mechanism 8, and the like for actuating and releasing the parking brake. However, the front wheel-side disk brake 5 is similar to the rear wheel-side disk brake 6 in terms of thrusting the piston 5B using the hydraulic pressure generated based on, for example, the operation on the brake pedal 9 to provide the braking force to the wheel (the front wheel 2) and thus the vehicle. In other words, the front wheel-side disk brake 5 is a hydraulic brake mechanism (a hydraulic brake) that provides the braking force by pressing the brake pads against the disk rotor 4 using the hydraulic pressure.

The disk brake equipped with the electric parking brake function may be employed as the front wheel-side disk brake 5, similarly to the rear wheel-side disk brake 6. Alternatively, the hydraulic disk brake may be employed as the rear wheel-side disk brake, and the hydraulic disk brake equipped with the electric parking brake function may be employed as the front wheel-side disk brake. Further, in the embodiment, the hydraulic disk brake 6 including the electric motor 7A is used as the electric brake (the electric parking brake). However, the electric brake (the electric brake mechanism) is not limited thereto, and examples usable as that include an electric disk brake equipped with an electric caliper, an electric drum brake that provides a braking force by pressing shoes against a drum using an electric motor, a disk brake equipped with an electric drum-type parking brake, a cable puller-type electric parking brake that actuates an application of a parking brake by pulling a cable using an electric motor, and an electro-mechanical brake that controls a braking force directly by an electric motor. In other words, various types of electric brakes (electric brake mechanisms) can be used as the electric brake (the electric brake mechanism), as long as the electric brake is configured to be able to press (thrust) a frictional member (a pad or a shoe) against a rotational member (a rotor or a drum) based on driving of an electric motor (an electric actuator), and hold and release this pressing force.

The brake pedal 9 is provided on a dashboard side of the vehicle body 1. The brake pedal 9 is operated by being pressed by a driver (an operator) at the time of the operation of braking the vehicle. Each of the disk brakes 5 and 6 provides and releases the braking force as a regular brake (a service brake) based on the operation on the brake pedal 9. A brake operation detection sensor (a brake sensor) 10, such as a brake lamp switch, a pedal switch (a brake switch), or a pedal stroke sensor, is provided at the brake pedal 9.

The brake operation detection sensor 10 is connected to the braking control apparatus 17, which is an ECU (Electronic Control Unit). The brake operation detection sensor 10 detects presence or absence of the operation of pressing the brake pedal 9 or an operation amount thereof, and outputs a detection signal thereof to the braking control apparatus 17. The detection signal of the brake operation detection sensor 10 is transmitted via, for example, a vehicle data bus 20 (for example, is output to another control apparatus, such as a control apparatus for suspension control).

The operation of pressing the brake pedal 9 is transmitted to the master cylinder 12, which functions as an oil pressure source (a hydraulic pressure source), via a booster 11. The booster 11 is configured as a negative-pressure booster (an atmospheric-pressure booster) or an electric booster (an electrically-driven booster) provided between the brake pedal 9 and the master cylinder 12. The booster 11 powers up the pressing force and transmits it to the master cylinder 12 at the time of the operation of pressing the brake pedal 9. At this time, the master cylinder 12 generates a hydraulic pressure based on brake fluid supplied (replenished) from a master reservoir 13. The master reservoir 13 is a hydraulic fluid tank that contains the brake fluid therein. The mechanism for generating the hydraulic pressure by the brake pedal 9 is not limited to the above-described configuration, and may be a mechanism that generates the hydraulic pressure according to the operation on the brake pedal 9, such as a brake-by-wire type mechanism.

The hydraulic pressure generated in the master cylinder 12 is transmitted to a hydraulic pressure supply apparatus 16 (hereinafter referred to as an ESC 16) via, for example, a pair of cylinder-side hydraulic pressure pipes 14A and 14B. The hydraulic pressure transmitted to the ESC 16 is supplied to the individual disk brakes 5 and 6 via brake-side pipe portions 15A, 15B, 15C, and 15D. The ESC 16 is disposed between each of the disk brakes 5 and 6 and the master cylinder 12. The ESC 16 distributes and supplies the hydraulic pressure output from the master cylinder 12 via the cylinder-side hydraulic pressure pipes 14A and 14B to the individual disk brakes 5 and 6 via the brake-side pipe portions 15A, 15B, 15C, and 15D.

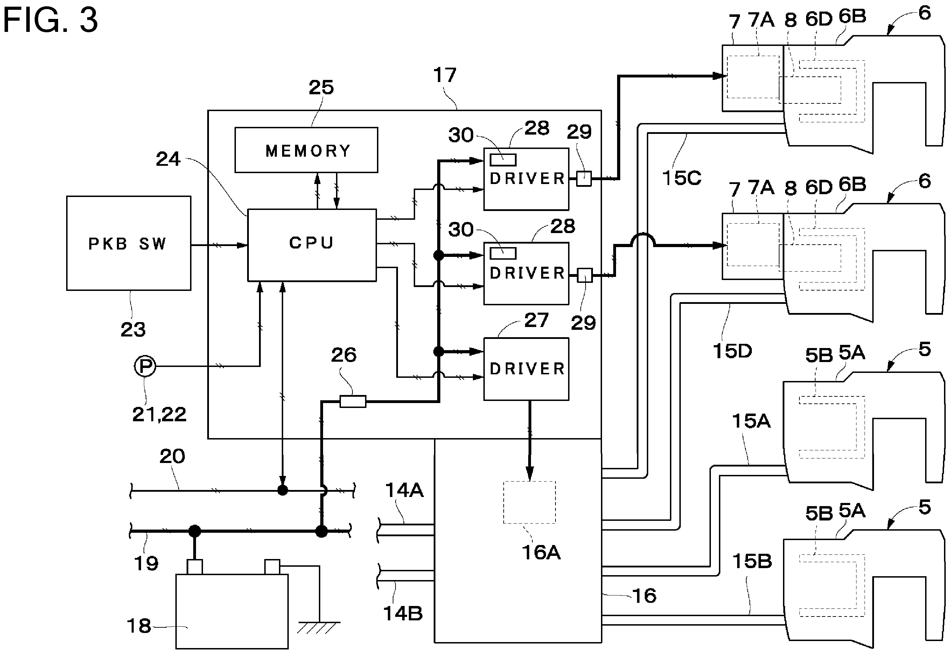

Now, the ESC 16 is a hydraulic pressure control apparatus that controls the hydraulic pressure of the hydraulic brake (the front wheel-side disk brakes 5 and the rear wheel-side disk brakes 6). To fulfill this function, the ESC 16 includes a plurality of control valves (not illustrated), a hydraulic pressure pump that pressurizes the brake hydraulic pressure (not illustrated), an electric motor 16A that drives this hydraulic pressure pump (refer to Fig. 3), and a reservoir for controlling the hydraulic pressure that temporarily stores extra brake fluid therein (not illustrated). Each of the control valves and the electric motor 16A in the ESC 16 are connected to the braking control apparatus 17, and the ESC 16 includes the braking control apparatus 17.

The opening/closing of each of the control valves and the driving of the electric motor 16A in the ESC 16 are controlled by the braking control apparatus 17. In other words, the braking control apparatus 17 is an ESC control unit that controls the ESC 16 (an ECU for the ESC). The braking control apparatus 17 includes a microcomputer, and electrically controls the driving of the ESC 16 (a solenoid of each of the control valves and the electric motor 16A therein). In this case, for example, an arithmetic circuit 24 and an ESC driving circuit 27 are built in the braking control apparatus 17. The arithmetic circuit 24 controls the supply of the hydraulic pressure from the ESC 16 and detects a malfunction of the ESC 16. The ESC driving circuit 27 drives the electric motor 16A and each of the control valves.

As will be described below, in addition to being the control unit for the ESC (the ECU for ESC) as the ESC control apparatus that controls the ESC 16, the braking control apparatus 17 is also a control unit for the parking brake (an ECU for the parking brake) as a parking brake control apparatus that controls the rear wheel-side disk brakes 6 (the electric motors 7A thereof). In other words, in the embodiment, the ESC control apparatus (the control unit for the ESC) and the parking brake control apparatus (the control unit for the parking brake) are formed by the single braking control apparatus 17. The braking control apparatus 17 electrically controls the driving of the electric motor 7A of the rear wheel-side disk brake 6 in addition to electrically controlling the driving of the ESC 16 (a solenoid of each control valve and the electric motor 16A therein). The braking control apparatus 17 is provided in the ESC 16 in the embodiment, but may be configured to be provided independently of the ESC 16. Further, the braking control apparatus 17 may be configured to be provided in a control apparatus (an ECU) that controls an apparatus other than the ESC 16.

The braking control apparatus 17 individually controls the driving of each of the control valves (the solenoid thereof) and the electric motor 16A for the hydraulic pressure pump in the ESC 16. Due to this control, the braking control apparatus 17 performs control of reducing, maintaining, and increasing or pressurizing the brake hydraulic pressure (a wheel cylinder hydraulic pressure) to supply to each of the disk brakes 5 and 6 via the brake-side pipe portions 15A to 15D for each of the disk brakes 5 and 6 individually. In this case, the braking control apparatus 17 performs, for example, braking force distribution control, anti-lock brake control (hydraulic ABS control), vehicle stabilization control, hill start aid control, traction control, vehicle following control, traffic lane departure avoidance control, and obstacle avoidance control (automatic brake control or brake control for reducing collision damage) by controlling the actuation of the ESC 16.

The ESC 16 directly supplies the hydraulic pressure generated in the master cylinder 12 to the disk brakes 5 and 6 (the calipers 5A and 6B thereof) at the time of a normal operation in response to the brake operation performed by the driver. On the other hand, for example, the ESC 16 maintains the hydraulic pressure in the disk brake 5 or 6 by closing a control valve for a pressure increase when performing the anti-lock brake control or the like, and discharges the hydraulic pressure in the disk brake 5 or 6 so as to release it to the reservoir for controlling the hydraulic pressure by opening a control valve for a pressure reduction when reducing the hydraulic pressure in the disk brake 5 or 6. Further, when increasing or pressurizing the hydraulic pressure to supply to the disk brake 5 or 6 to perform, for example, the stabilization control (electronic stability control) when the vehicle runs, the ESC 16 actuates the hydraulic pressure pump by the electric motor 16A with a control valve for supply closed, thereby supplying the brake fluid discharged from this hydraulic pressure pump to the disk brake 5 or 6. At this time, the brake fluid in the master reservoir 13 is supplied from the master cylinder 12 side toward an intake side of the hydraulic pressure pump.

Power from a battery 18 (or a generator driven by an engine), which serves as a vehicle power source, is supplied to the braking control apparatus 17 via a power source line 19. As illustrated in Fig. 1, the braking control apparatus 17 is connected to the vehicle data bus 20. Instead of the ESC 16, a known ABS unit can also be used. Alternatively, the master cylinder 12 and the brake-side pipe portions 15A to 15D can also be directly connected to each other without the provision of the ESC 16 (i.e., with the ESC 16 omitted).

The vehicle data bus 20 constitutes a CAN (Controller Area Network) as a serial communication portion mounted on the vehicle body 1. A large number of electronic apparatuses mounted on the vehicle (for example, various kinds of ECUs including the braking control apparatus 17) carry out in-vehicle multiplex communication with one another via the vehicle data bus 20. In this case, examples of vehicle information transmitted to the vehicle data bus 20 include information (vehicle information) based on detection signals (output signals) from a brake operation detection sensor 10, an ignition switch, a seat belt sensor, a door lock sensor, a door opening sensor, a seat occupancy sensor, a vehicle speed sensor, a steering angle sensor, an accelerator sensor (an accelerator operation sensor), a throttle sensor, an engine rotation sensor, a stereo camera, a millimeter-wave radar, a slope sensor (an inclination sensor), a gearshift sensor (transmission data), an acceleration sensor (a G sensor), a wheel speed sensor, a pitch sensor that detects a motion of the vehicle in a pitch direction, a temperature sensor that detects a temperature around the vehicle (an ambient temperature), and the like.

Further, the examples of the vehicle information transmitted to the vehicle data bus 20 also include a detection signal from a WC pressure sensor 21, which detects the wheel cylinder pressure (the WC pressure), and a detection signal from an MC pressure sensor 22, which detects a master cylinder pressure (an MC pressure). The embodiment is configured to include both the WC pressure sensor 21 and the MC pressure sensor 22, but, for example, the WC pressure sensor 21 may be omitted if the WC pressure can be estimated using the MC pressure sensor 22. Further, the MC pressure sensor 22 may be provided in the ESC 16, and/or the WC pressure sensor 21 may be provided in the ESC 16. As illustrated in Fig. 3, the WC pressure sensor 21 and the MC pressure sensor 22 can be directly connected to, for example, the braking control apparatus 17.

Next, the electric parking brake will be described.

The parking brake switch (PKB-SW) 23 as a switch of the electric parking brake is provided in the vehicle body 1 at a position located close to a driver's seat (not illustrated). The parking brake switch 23 is an operation instruction portion operated by the driver. The parking brake switch 23 transmits a signal (an actuation request signal) corresponding to a request to actuate the parking brake (an application request working as a holding request or a release request working as a stop request) according to an operation instruction from the driver to the parking brake control apparatus 17. In other words, the parking brake switch 23 outputs an actuation request signal (an application request signal working as a holding request signal or a release request signal working as a stop request signal) for actuating the piston 6D and thus the brake pads 6C for the application (holding actuation) or for the release (release actuation) based on the driving (the rotation) of the electric motor 7A to the parking brake control apparatus 17. A signal input via the vehicle data bus 20 serving as a communication line, such as accelerator pedal operation information, may be used as the actuation request signal for the parking brake.

When the parking brake switch 23 is operated by the driver toward a braking side (an application side), i.e., when the application request for providing the braking force to the vehicle (the braking holding request) is issued, the application request signal (the parking brake request signal or the application instruction) is output from the parking brake switch 23. In this case, the electric motor 7A of the rear wheel-side disk brake 6 receives supply of power for rotating this electric motor 7A toward the braking side via the braking control apparatus 17. At this time, the rotation-linear motion conversion mechanism 8 thrusts (presses) the piston 6D toward the disk rotor 4 side based on the rotation of the electric motor 7A, and holds the thrust piston 6D. As a result, the rear wheel-side disk brake 6 is brought into a state that the braking force as the parking brake (or the auxiliary brake) is provided thereto, i.e., an application state (a braking holding state).

On the other hand, when the parking brake switch 23 is operated by the driver toward a braking release side (a release side), i.e., when the release request for releasing the braking force on the vehicle (the braking release request) is issued, the release request signal (the parking brake release request signal or a release instruction) is output from the parking brake switch 23. In this case, the electric motor 7A of the rear wheel-side disk brake 6 receives supply of power for rotating this electric motor 7A in the opposite direction from the braking side via the braking control apparatus 17. At this time, the rotation linear-motion conversion mechanism 8 releases the holding of the piston 6D (releases the pressing force generated by the piston 6D) by the rotation of the electric motor 7A. As a result, the rear wheel-side disk brake 6 is brought into a state that the application of the braking force as the parking brake (or the auxiliary brake) is released, i.e., a release state (a braking release state).

The braking control apparatus 17 as the control apparatus (the electric brake control apparatus) constitutes the brake apparatus together with the rear wheel-side disk brake 6 (the caliper 6B, the piston 6D, the electric motor 7A, and the rotation-linear motion conversion mechanism 8). Further, the braking control apparatus 17 constitutes the electric brake apparatus together with the electric motor 7A and the rotation-linear motion conversion mechanism 8. The braking control apparatus 17 controls the driving of the electric motor 7A. To fulfill this function, the braking control apparatus 17 includes the arithmetic circuit (CPU) 24 constituted by a microcomputer or the like and a memory 25, as illustrated in Fig. 3. Power from the battery 18 (or the generator driven by the engine) is supplied to the braking control apparatus 17 via the power source line 19. For example, the arithmetic circuit 24 can be configured as a dual-core unit (a dual-circuit unit) that performs the same processing in parallel and also mutually monitors whether there is a difference between the processing results. In this case, even when a malfunction has occurred in one of the cores (the circuits), the control can continue (can be backed up) by the other of the cores (the circuits). Alternatively, the braking control apparatus 17 may be configured to include two arithmetic circuits, i.e., an arithmetic circuit for the ESC and an arithmetic circuit for the electric parking brake, although this configuration is not illustrated herein.

As described above, the braking control apparatus 17 controls the opening/closing of each of the control valves and the driving of the electric motor 16A in the ESC 16, thereby reducing, maintaining, or increasing or pressurizing the brake hydraulic pressure to supply to each of the disk brakes 5 and 6. In addition thereto, the braking control apparatus 17 controls the driving of the electric motors 7A and 7A of the rear wheel-side disk brakes 6 and 6, thereby generating the braking force (the parking brake or the auxiliary brake) when the vehicle is parked or stopped (or is running if necessary). In other words, the braking control apparatus 17 actuates (applies or releases) the disk brakes 6 and 6 as the parking brake (the auxiliary brake when necessary) by driving the left and right electric motors 7A and 7A. To fulfill this function, the input side of the braking control apparatus 17 is connected to the parking brake switch 23, and the output side thereof is connected to the respective electric motors 7A and 7A of the disk brakes 6 and 6.

The braking control apparatus 17 includes the arithmetic circuit 24, the ESC driving circuit 27, and motor driving circuits 28 and 28 built therein. The arithmetic circuit 24 is used to control the supply of the hydraulic pressure of the ESC 16 and the application/release of the electric parking brake. The ESC driving circuit 27 is used to control, for example, the electric motor 16A of the ESC 16. The motor driving circuits 28 and 28 are used to control the electric motors 7A and 7A of the electric parking brakes.

The braking control apparatus 17 drives the left and right electric motors 7A and 7A to apply (hold) or release (stop) the left and right disk brakes 6 and 6 based on the actuation request (the application request or the release request) according to the operation performed on the parking brake switch 23 by the driver, an actuation request according to a determination of an automatic application/an automatic release of the parking brake, or the like. At this time, the rear wheel-side disk brake 6 holds or releases the piston 6D and the brake pads 6C by the rotation-linear motion conversion mechanism 8 based on the driving of each of the electric motors 7A. In this manner, the braking control apparatus 17 controls the driving of the electric motor 7A so as to thrust the piston 6D (and thus the brake pads 6C) according to the actuation request signal for the holding actuation (the application) or the release actuation (the release) of the piston 6D (and thus the brake pads 6C).

As illustrated in Fig. 3, the parking brake switch 23, the vehicle data bus 20, voltage sensor portions 26, 30, and 30, the ESC driving circuit 27, the motor driving circuits 28 and 28, current sensor portions 29 and 29, and the like, in addition to the memory 25 as a storage portion, are connected to the arithmetic circuit 24 of the braking control apparatus 17. Various kinds of state amounts of the vehicle that are required to control the ESC 16 and control (actuate) the parking brake, i.e., various kinds of vehicle information can be acquired from the vehicle data bus 20. Further, the braking control apparatus 17 can output information and instructions to various kinds of ECUs via the vehicle data bus 20.

The braking control apparatus 17 may be configured in such a manner that the vehicle information acquired from the vehicle data bus 20 is acquired by connecting a sensor that detects this information directly to the braking control apparatus 17 (the arithmetic circuit 24 thereof). Alternatively, the arithmetic circuit 24 of the braking control apparatus 17 may be configured in such a manner that the actuation request based on the determination of the automatic application/automatic release is input from another control apparatus (ECU) connected to the vehicle data bus 20. In this case, the vehicle can be configured in such a manner that the other control apparatus controls the determination of the automatic application/automatic release, instead of the braking control apparatus 17.

The braking control apparatus 17 includes the memory 25 as the storage portion embodied by, for example, a flash memory, a ROM, a RAM, or an EEPROM. The memory 25 stores therein a processing program used for the control of the ESC 16 and a processing program used for the control of the parking brake. In this case, the memory 25 stores therein, for example, a processing program for performing processing flows illustrated in Figs. 5 to 12, which will be described below. Further, in the embodiment, an EEPROM as a nonvolatile memory is provided as the memory 25. The nonvolatile memory stores therein various kinds of information and various kinds of signals used at the time of the application and at the time of the release. A flash memory may be used as the nonvolatile memory storing the various kinds of information and the various kinds of signals therein.

In the embodiment, the ESC control apparatus, which controls the ESC 16 (the electric motor 16A and each of the control valves), and the parking brake control apparatus, which controls the parking brake (the electric motors 7A and 7A), are constituted by the single braking control apparatus 17. However, the configuration is not limited thereto, and, for example, the ESC control apparatus and the parking brake control apparatus may be configured as individual separate apparatuses from each other. Further, the braking control apparatus 17 is configured to control the two left and right rear-side disk brakes 6 and 6, but the parking brake control apparatus may be provided for each of the left and right rear-side disk brakes 6 and 6 along with the ESC control apparatus and the parking brake control apparatus configured as individual separate apparatuses. In this case, each of the parking brake control apparatuses can also be provided integrally with the rear-side disk brake 6. Further, the braking control apparatus, the ESC control apparatus, or the parking brake control apparatus may be configured integrally with a control apparatus that controls a function other than braking (various kinds of ECUs other than the braking ECU, such as a control apparatus for power steering).

As illustrated in Fig. 3, the braking control apparatus 17 includes the power source voltage sensor portion 26, the ESC driving circuit 27, the left and right motor driving circuits 28 and 28, the left and right current sensor portions 29 and 29, the left and right voltage sensor portions 30 and 30, and the like, which are built therein. The power source voltage sensor portion 26 detects a voltage fed from the power source line 19. The ESC driving circuit 27 drives each of the control valves (the solenoid thereof) and the electric motor 16A in the ESC 16. The left and right motor driving circuits 28 and 28 drive the left and right electric motors 7A and 7A of the parking brakes, respectively. The left and right current sensor portions 29 and 29 detect respective motor currents of the left and right electric motors 7A and 7A. The left and right voltage sensor portions 30 and 30 detect respective motor voltages (voltages between terminals) in the left and right electric motors 7A and 7BA.

The power source voltage sensor portion 26, the ESC driving circuit 27, the left and right motor driving circuits 28 and 28, the left and right current sensor portions 29 and 29, and the left and right voltage sensor portions 30 and 30 are each connected to the arithmetic circuit 24. The braking control apparatus 17 (the arithmetic circuit 24) monitors (checks) the voltages supplied to the electric motors 7A and the currents flowing therein by the current sensor portions 29 and 29 and the voltage sensor portions 30 and 30. The motor driving circuits 28 can switch the power supply to the electric motors 7A to ON (application or release)/OFF/shorting.

The braking control apparatus 17 (the arithmetic circuit 24) can, for example, determine whether to stop the driving of the electric motors 7A and 7A (determine whether the application is completed or determine whether the release is completed) based on, for example, the current values (the monitored current values) of the electric motors 7A and 7A that are detected by the current sensor portions 29 and 29 when applying or releasing the parking brake. The illustrated example is provided with both the "power source voltage sensor portion 26 that detects the voltage of the power source line 19" and the "left and right voltage sensor portions 30 and 30 that detect the voltages between terminals in the left and right electric motors 7A and 7A", but any one of them may be omitted.

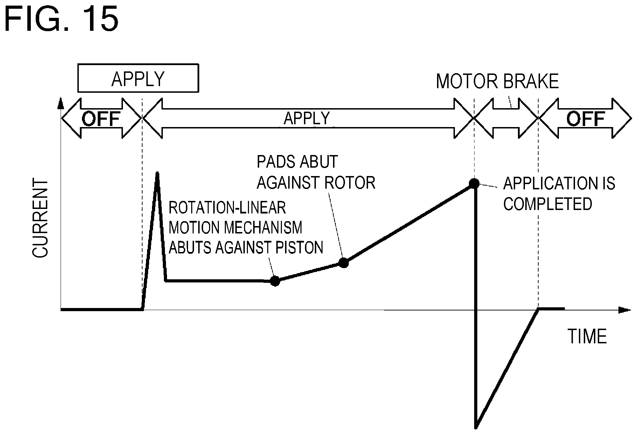

Fig. 15 illustrates an overview of a basic operation of the electric parking brake at the time of the application, i.e., one example of a time-series change in the current at the time of the application. The braking control apparatus 17 (the arithmetic circuit 24) conducts the application or the motor brake by setting the power supply to the electric motor 7A to ON/OFF/shorting by each of the motor driving circuits 28 and 28 according to the operation of the driver (the operator) or the like. The current waveform during the application in Fig. 15 indicates an example when no hydraulic fluid is added (the brake pedal is not pressed). Further, basically, the current and the generated thrust force are proportional to each other.

For example, at the time of the application, the electric parking brake functions in the following manner according to the operation of setting the power supply to ON. That is, an inrush current flows according to the driving of the electric motor 7A, and, after that, a current required to cause the rotation-linear motion conversion mechanism 8 to operate (thrust the linear motion member 8A2 to the piston 6D side) flows until the rotation-linear motion conversion mechanism 8 abuts against the piston 6D. A load increases due to the abutment of the rotation-linear motion conversion mechanism 8 (the linear motion member 8A2) with the piston 6D, and the load further increases due to the abutment of the brake pads 6C with the disk rotor 4 and the current also increases (the gradient of the current increases) according to the stiffness of the brake pads 6C and the disk rotor 4. The braking control apparatus 17 determines that the braking force required to stop the vehicle is generated based on an increase in the thrust force calculated based on the current by a predetermined or larger amount (for example, the thrust force reaches a preset target thrust force), and completes the application. The thrust force can be calculated according to, for example, the following equation 1.

[Equation 1]

$$\text{thrust force} = \text{torque constant} \times \text{current} \times \text{efficiency} \times \text{reduction ratio} \times \text{lead}$$

Further, the electric parking brake functions in the following manner according to the shorting (motor brake) operation. When the application is completed, a torque in a direction for stopping the electric motor 7A (the motor brake) is generated by causing the motor driving circuit 28 to short the motor terminals therebetween (establish a motor brake state) and generating a current in an opposite direction with the aid of an inductive voltage. In the embodiment, the braking control apparatus 17 determines whether the braking force required to stop the vehicle is provided basically by calculating the thrust force according to the above-described equation 1. On the other hand, the braking control apparatus 17 may determine whether the braking force required to stop the vehicle is provided based on, for example, an increase in the current by a predetermined amount or more. However, the thrust force changes according to the torque constant, and the torque constant has a temperature characteristic. Therefore, the completion of the application can be more accurately determined by estimating the torque constant and using the estimated thrust force.

Then, the above-described technique discussed in PTL 1 estimates the efficiency when calculating the thrust force based on the current using a reverse rotation voltage, which is a voltage in a state that the current is stopped after the application operation. However, according to the conventional technique, the voltage is not taken into consideration to calculate the estimated thrust force. Therefore, for example, when an electronic load such as an air conditioner is turned off or the vehicle recovers from cranking (when power supply to the engine startup motor is stopped), the current also increases according to an increase in the voltage supplied to the electric motor of the electric brake, and the estimated thrust force also increases. On the other hand, a torque generated in correspondence with this increase in the current is consumed as a speed-up of the rotational speed of the electric motor, and therefore does not contribute to an increase in the actual thrust force.

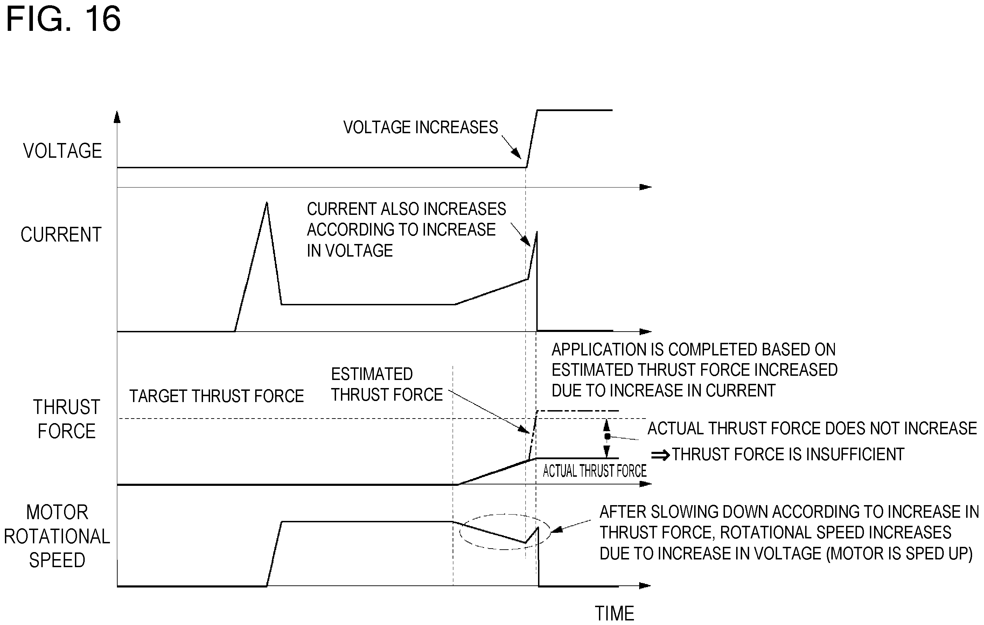

That is, in the case of the conventional technique failing to take the increase in the voltage into consideration, the brake apparatus may determine that the application is completed when the increased estimated thrust force reaches the target thrust force, and end up completing the application operation in a state that the thrust force is insufficient without the actual thrust force reaching the target thrust force yet. In other words, if the voltage increases at the time of the actuation of the electric parking, the application may be completed early and the thrust force (the braking force) based on the driving of the electric motor may fall short. As a result, for example, when the vehicle is stopped on an upslope road, the vehicle may slip down. The details thereof will be described with reference to Fig. 16.

Fig. 16 illustrates one example of time-series changes in the "voltage", the "current", the "thrust force", and the "motor rotational speed" when the increase in the current according to the increase in the voltage is not taken into consideration. As illustrated in Fig. 16, the voltage supplied to the electric motor increases and the current increases while the thrust force increases due to the application. In this case, the estimated thrust force calculated based on the current also increases. Then, when the increased estimated thrust force reaches the target thrust force, the application operation is completed. However, the increased current is consumed to speed up the rotational speed of the motor and therefore does not contribute to an increase in the actual thrust force. Therefore, the application operation is completed in a state that the thrust force is insufficient, and the vehicle may slip down if stopped on an upslope road.

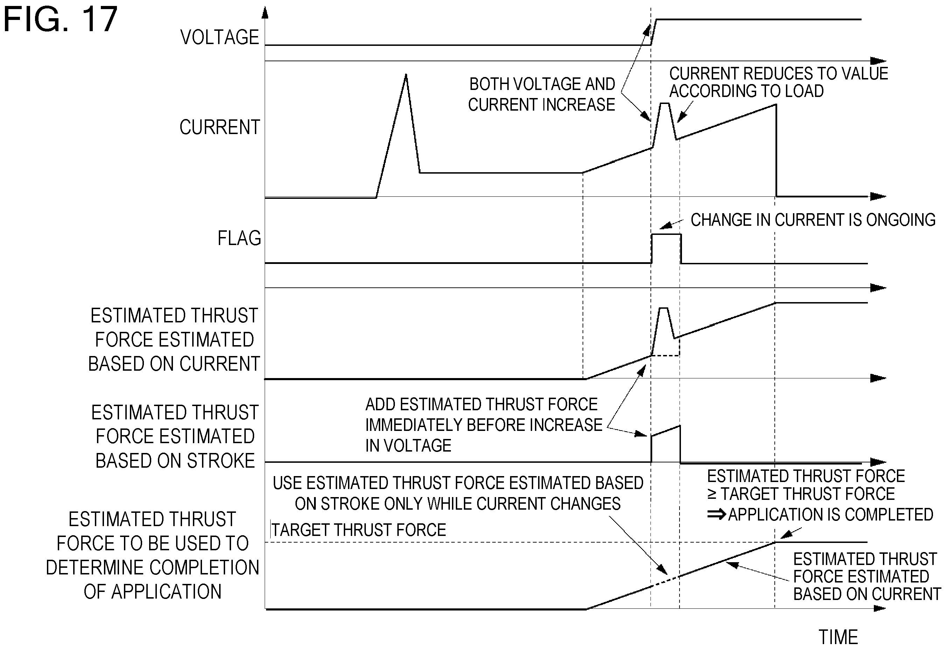

In light thereof, in the embodiment, the change in the current according to the increase in the voltage is detected, and the completion of the application operation is determined using the estimated thrust force estimated based on the stroke while the current change is ongoing. In other words, in the embodiment, the change in the current according to the increase in the voltage is detected, and the estimated thrust force to be used to determine the completion of the application is switched according to whether the change in the current is detected. In this case, the completion of the application is determined using the estimated thrust force calculated based on the current while no change in the current is detected, and is determined using the estimated thrust force calculated based on the stroke while the change in the current is detected. Fig. 17 illustrates one example of time-series changes in the "voltage", the "current", a "current change detection flag", the "estimated thrust force estimated based on the current", the "estimated thrust force estimated based on the stroke", and the "estimated thrust force to be used to determine the completion of the application" according to the embodiment.

As illustrated in Fig. 17, when a load applied to the nut (the linear motion member 8A2) increases due to the advancement of the piston 6D, the current increases and the applied voltage reduces. On the other hand, when the voltage increases, both the voltage and the current increase. Therefore, the change in the current according to the increase in the voltage is detected using a difference that increases for both the voltage and the current. Then, the method for calculating the estimated thrust force to be used to determine the completion of the application is switched based on whether the change in the current is detected. That is, the estimated thrust force calculated based on the current is used when no change in the current is detected. The estimated thrust force calculated based on the stroke is used when the change in the current is detected.

In this case, the estimated thrust force is calculated using the stroke by converting the change amount of the stroke into the thrust force according to a plant model calculated based the stiffness of the pad (the brake pads 6C), the rotor (the disk rotor 4), and the pressing member (the piston 6D), and adding it to the estimated thrust force immediately before the voltage increases. Further, whether the change in the current is detected is determined in the following manner. That is, the braking control apparatus 17 determines that "the change in the current is detected" (sets the current change detection flag to ON) when the voltage increases, and determines that the current starts conforming with the load according to the increased voltage and determines that "no change in the current is detected" (sets the current change detection flag to OFF) when the current is switched from a reduction gradient to an increase gradient.

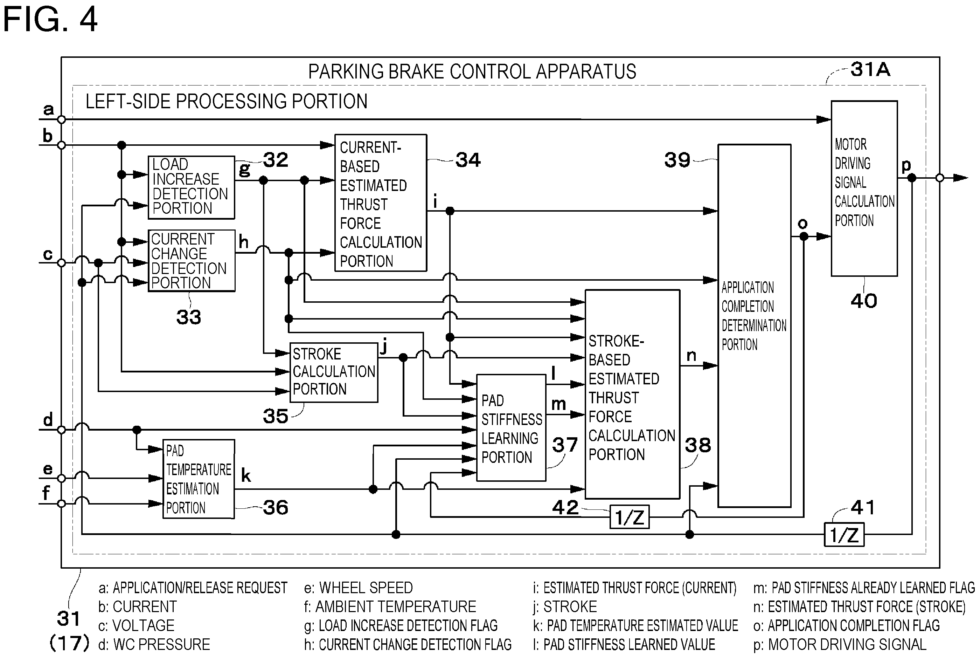

Due to that, in the embodiment, the thrust force can be accurately calculated even when the voltage increases. Therefore, the application can be completed with the thrust force required to stop the vehicle. As a result, the vehicle can be prevented from slipping down on the upslope road. Further, the thrust force can be prevented from falling short using the parking brake mechanism (the PKB mechanism) alone. Therefore, the system can be simply configured and can be constructed using only the parking brake mechanism as an electrical control apparatus, thereby allowing the cost of the overall system to be curtailed. In the following description, the braking control apparatus 17 according to the embodiment, more specifically, a portion in the braking control apparatus 17 that performs processing relating to the control of the electric brake (the electric motor 7A) (hereinafter, this portion will be referred to as a parking brake control apparatus 31) will be described with reference to Figs. 4 to 14.

The parking brake control apparatus 31 as the control apparatus (the electric brake control apparatus) constitutes a part of the braking control apparatus 17. As illustrated in Fig. 4, the parking brake control apparatus 31 includes a left-side control portion 31A and a right-side control portion (not illustrated). The left-side control portion 31A performs processing relating to the electric motor 7A located on the left side of the vehicle body 1. The right-side control portion performs processing relating to the electric motor 7A located on the right side of the vehicle body 1. The left-side control portion 31A and the right-side control portion are similarly configured except for the difference that they are the left side and the right side, and therefore will be described in the following description mainly focusing on the left-side control portion 31A, and omitting the illustration and the description of the right-side control portion.

Fig. 4 illustrates the overall control configuration according to the embodiment. The control configuration includes nine control blocks (a load increase detection portion 32, a current change detection portion 33, a current-based estimated thrust force calculation portion 34, a stroke calculation portion 35, a pad temperature estimation portion 36, a pad stiffness learning portion 37, a stroke-based estimated thrust force calculation portion 38, an application completion determination portion 39, and a motor driving signal calculation portion 40). The same control is performed on the left side and the right side although this is not illustrated. However, driving the electric motors 7A and 7A on the left side and the right side at the same time leads to an increase in the electric load, and therefore the electric motors 7A and 7A are preferably driven at timings different between the left side and the right side. In light thereof, in the embodiment, the timings of starting driving the electric motors 7A and 7A are desynchronized (for example, desynchronized by approximately several tens of milliseconds) between the left side and the right side to prevent a voltage drop due to an overlap of the inrush currents on the left side and the right side.

As illustrated in Fig. 4, the parking brake control apparatus 31 (the left-side control portion 31A and the right-side control portion) includes the load increase detection portion 32, the current change detection portion 33, the current-based estimated thrust force calculation portion 34 (hereinafter referred to as the current estimated thrust force calculation portion 34), the stroke calculation portion 35, the pad temperature estimation portion 36, the pad stiffness learning portion 37, the stroke-based estimated thrust force calculation portion 38 (hereinafter referred to as the stroke estimated thrust force calculation portion 38), the application completion determination portion 39, the motor driving signal calculation portion 40, and 1/z portions 41 and 42. The processing is performed every predetermined control period, such as a period of 10 ms in each block in the present control configuration. Further, the processing is performed for the left side first and the right side next. Therefore, when an output signal of a right-side block is input to a left-side block, such a block is indicated as a block "1/z", i.e., the 1/z portions 41 and 42 to express that a value calculated in the previous task (control cycle) is directly used in the present task.

The parking brake control apparatus 31 causes the load increase detection portion 32 to determine whether the load increases due to the application (Apply), and causes the current change detection portion 33 to determine whether the current changes according to the increase in the voltage. The current estimated thrust force calculation portion 34 calculates the estimated thrust force (the current) while the load increases when the current does not change. The stroke calculation portion 35 calculates the stroke while the load increases. The pad temperature estimation portion 36 estimates the present pad temperature. The pad stiffness learning portion 37 calculates the pad stiffness when no change in the current is detected based on the stroke and the estimated thrust force (the current). The stroke estimated thrust force calculation portion 38 calculates the estimated thrust force (the stroke) based on the pad stiffness and the stroke when the change in the current is detected. The application completion determination portion 39 determines whether the estimated thrust force (the current) or the estimated thrust force (the stroke) reaches the thrust force required to stop the vehicle. The motor driving signal calculation portion 40 calculates an instruction value (a motor driving signal) directed to the motor driving circuit 28 based on a result of the above-described determination.

The parking brake control apparatus 31 calculates the estimated thrust force to be used to determine the completion of the application by converting the change amount of the stroke into the thrust force when the voltage increases. In this case, the processing for calculating the estimated thrust force (the stroke), i.e., the stroke calculation portion 35, the pad temperature estimation portion 36, the pad stiffness learning portion 37, and the stroke estimated thrust force calculation portion 38 are realized using the plant model. In the following description, specific processing performed by each of the control blocks in the parking brake control apparatus 31 will be described.

First, the load increase detection portion 32 determines whether the load increases during the application based on a gradient calculated from the current during the application. To fulfill this function, as illustrated in Fig. 4, the "motor driving signal (previous value) from the motor driving signal calculation portion 40" and the "current (monitored current) from the current sensor portion 29" are input to the load increase detection portion 32. The load increase detection portion 32 detects the increase in the load on the electric motor 7A after the inrush current is detected based on the motor driving signal (the previous value) and the current (the current value), and outputs a load increase detection flag (ON/OFF), which is a result of this detection, to the current estimated thrust force calculation portion 34, the stroke calculation portion 35, and the stroke estimated thrust force calculation portion 38. The load increase detection portion 32 determines whether the load starts increasing during the application to prevent the application from being erroneously determined to be completed in a no-load region due to the increase in the voltage.

Fig. 5 illustrates processing for detecting the increase in the load that is performed by the load increase detection portion 32. The processing illustrated in Fig. 5 is repeatedly performed per predetermined control period (for example, 10 ms). After the processing illustrated in Fig. 5 is started, in S1, the load increase detection portion 32 determines whether the motor driving signal (the previous value) corresponding to the motor driving state is the application (Apply) or the motor brake after the application (MBK after Apply). The motor driving signal (the previous value) is input from the motor driving signal calculation portion 40 to the load increase detection portion 32 via the 1/z portion 41. If "NO" is determined in S1, i.e., the motor driving signal (the previous value) is determined not to be the application or the motor brake after the application, the processing proceeds to S2. In S2, an inrush current detection flag is set to "OFF". "OFF" corresponds to "before the inrush current during the application is detected". After the inrush current detection flag is set to "OFF" in S2, the processing proceeds to S3. In S3, the load increase detection flag is set to "OFF". "OFF" corresponds to "no load on the electric motor 7A is detected". After the load increase detection flag is set to "OFF" in S3, the processing proceeds to END.

On the other hand, if "YES" is determined in S1, i.e., the motor driving signal (the previous value) is determined to be the application or the motor brake after the application, the processing proceeds to S4. In S4, the load increase detection portion 32 determines whether the load increase detection flag is "ON". If "YES" is determined in S4, i.e., the load increase detection flag is determined to be "ON", the processing proceeds to S5. In S5, the load increase detection flag is kept at the "previous value", i.e., is kept the same as the previous control period. More specifically, in S5, the load increase detection flag is kept at "ON" if being "ON" in the previous control period. Then, the processing proceeds to END.

On the other hand, if "NO" is determined in S4, i.e., the load increase detection flag is determined not to be "ON"(determined to be "OFF"), the processing proceeds to S6. In S6, the gradient of the current value is calculated. The gradient of the current can be calculated as, for example, the difference between the previous value and the present value of the current value. However, it is preferable to calculate the gradient of the current as a gradient in a predetermined time to eliminate an influence due to a disturbance such as noise. The current value is input from the current sensor portion 29 to the load increase detection portion 32. In S7 subsequent to S6, the load increase detection portion 32 determines whether the inrush current detection flag is "ON". If "YES" is determined in S7, i.e., the inrush current detection flag is determined to be "ON", the processing proceeds to S10. If "NO" is determined in S7, i.e., the inrush current detection flag is determined not to be "ON" (determined to be "OFF"), the processing proceeds to S8. In S8, the load increase detection portion 32 determines whether the gradient of the current calculated in S6 is equal to or smaller than a current gradient threshold value 1 to determine the detection of the inrush current. The current gradient threshold value 1 is set to a value that makes it possible to determine that the current value reduces from a peak current of the inrush current (a negative value). If "YES" is determined in S8, i.e., the inrush current during the application is switched to the reduction gradient, the processing proceeds to S9. In S9, the inrush current detection flag is set to "ON". "ON" corresponds to "the inrush current is detected". After the inrush current detection flag is set to "ON" in S9, the processing proceeds to S10. On the other hand, if "NO" is determined in S8, i.e., the gradient of the current is determined to be greater than the current gradient threshold value 1, the processing proceeds to S3.

In S10, the load increase detection portion 32 determines whether the gradient of the current calculated in S6 is equal to or greater than a current gradient threshold value 2. The current gradient threshold value 2 can be set as, for example, a gradient (a change amount) of the current exhibited when the load on the electric motor 7A increases with the brake pads 6C in abutment with the disk rotor 4. If "YES" is determined in S10, i.e., the gradient of the current is determined to be equal to or greater than the current gradient threshold value 2, the processing proceeds to S11. In S11, the load increase detection flag is set to "ON". "ON" corresponds to "the increase in the load on the electric motor 7A is detected". After the load increase detection flag is set to "ON" in S11, the processing proceeds to END.

On the other hand, if "NO" is determined in S10, i.e., the gradient of the current is determined to be smaller than the current gradient threshold value 2, the processing proceeds to S12. In step S12, the load increase detection portion 32 determines whether the current is equal to or higher than a maximum no-load current. The maximum no-load current corresponds to a current required to move only the electric mechanism before the nut (the linear motion member 8A2) of the electric mechanism (the rotation-linear motion conversion mechanism 8) abuts against the pressing member (the piston 6D). The maximum no-load current can be set to, for example, a value resulting from calculating the maximum current flowing until the pad (the brake pads 6C) is pressed by the nut (the linear motion member 8A2) based on the motor characteristic and efficiency such as the torque constant and the resistance between terminals, the efficiency including a loss at the gear portion such as viscous resistance, and the like. If "NO" is determined in S12, i.e., the current is determined to be lower than the maximum no-load current, the processing proceeds to S3. On the other hand, if "YES" is determined in S12, i.e., the current is determined to be equal to or higher than the maximum no-load current, the processing proceeds to S11.

In this manner, the load increase detection portion 32 determines that the load increases if "the motor driving signal (the previous value) is the application (Apply) or the motor brake after the application (MBK after Apply) and the calculated gradient of the current is equal to or greater than the threshold value 2 or the current is equal to or higher than the maximum no-load current". In this case, the load increase detection portion 32 sets the load increase detection flag to ON. On the other hand, the load increase detection portion 32 determines that the load does not increase if "the motor driving signal (the previous value) is other than the application (Apply) or the motor brake after the application (MBK after Apply)" and if "the motor driving signal (the previous value) is the application (Apply) or the motor brake after the application (MBK after Apply) and the gradient of the current is smaller than the threshold value 2 and the current is lower than the maximum no-load current". In this case, the load increase detection portion 32 sets the load increase detection flag to OFF. Further, the load increase detection portion 32 holds the previous value of the load increase detection flag until the motor driving signal (the previous value) is switched from the application or the motor brake after the application after the load increase detection flag is set to ON.

The maximum no-load current varies depending on the temperature. Therefore, assuming that a no-load current is the minimum current after the inrush current at the time of the startup of the motor, a value resulting from adding a predetermined offset value to the no-load current, instead of a fixed value, may be set as the maximum no-load current. Further, as the method for detecting the increase in the load, the increase in the load may be determined based on advancement since the start of the application by an amount corresponding to the separation from the piston upon the release by the rotation-linear motion mechanism. However, the distance until the abutment with the piston unintentionally varies if the piston is pressed in by the hydraulic pressure, and therefore the detection based on the current is more preferable.

Next, the current change detection portion 33 determines whether the current starts changing based on a time in which the voltage increases during the application. Further, the current change detection portion 33 determines whether the change in the current is converged based on the gradient calculated from the current after the change in the current is detected. To fulfill this function, as illustrated in Fig. 4, the "motor driving signal (previous value) from the motor driving signal calculation portion 40", the "current (monitored current) from the current sensor portion 29", and the "voltage (monitored voltage) from the voltage sensor portion 30" are input to the current change detection portion 33. The current change detection portion 33 detects the change in the current according to an increase in the voltage of the electric motor 7A based on the motor driving signal (the previous value), the current (the current value), and the voltage (the voltage value) and outputs the current change detection flag (ON/OFF), which is a result of this detection, to the current estimated thrust force calculation portion 34, the pad stiffness learning portion 37, the stroke estimated thrust force calculation portion 38, and the application completion determination portion 39. The current change detection portion 33 detects the change in the current according to an increase in the voltage during the application to prevent the estimated thrust force from being erroneously calculated according to the current changing due to the increase in the voltage.

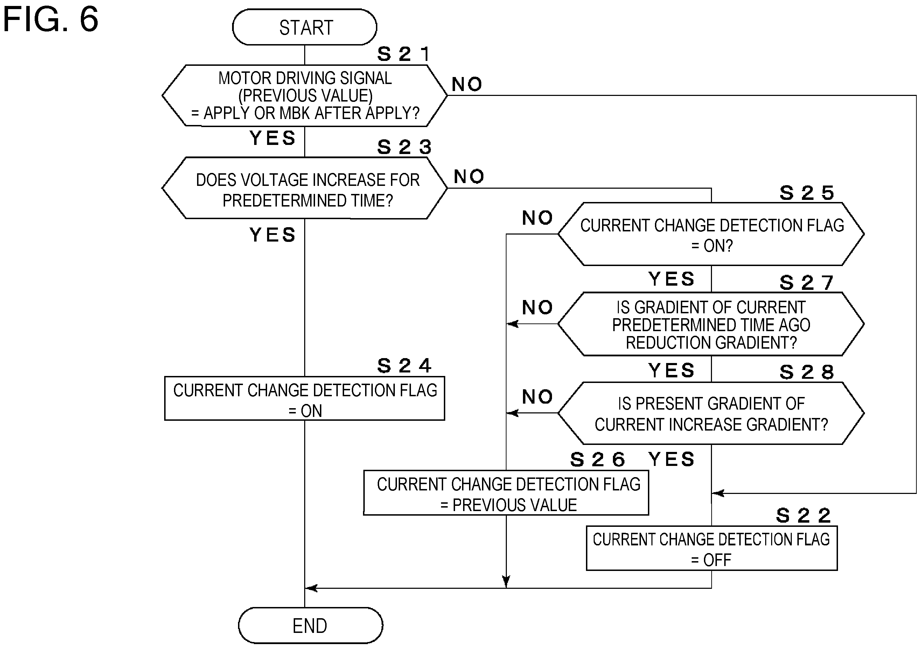

Fig. 6 illustrates processing for detecting the change in the current that is performed by the current change detection portion 33. The processing illustrated in Fig. 6 is also repeatedly performed per predetermined control period (for example, 10 ms). After the processing illustrated in Fig. 6 is started, in S21, the current change detection portion 33 determines whether the motor driving signal (the previous value) corresponding to the motor driving state is the application (Apply) or the motor brake after the application (MBK after Apply). This processing is processing similar to the processing in step S1 illustrated in Fig. 5. If "NO" is determined in S21, i.e., the motor driving signal (the previous value) is determined not to be the application or the motor brake after the application, the processing proceeds to S22. In S22, the current change detection flag is set to "OFF". "OFF" corresponds to "no change in the current of the electric motor 7A is detected". After the current change detection flag is set to "OFF" in S22, the processing proceeds to END.

On the other hand, if "YES" is determined in S21, i.e., the motor driving signal (the previous value) is determined to be the application or the motor brake after the application, the processing proceeds to S23. In S23, the current change detection portion 33 determines whether the voltage increases for a predetermined time. The time for determining an increase in the voltage (the predetermined time) is set to a value that makes a reduction in the thrust force allowable even when the application is completed early due to a delay in the detection, and also prevents an increase in the voltage from being undetected. If "YES" is determined in S23, i.e., the voltage is determined to increase for the predetermined time, the processing proceeds to S24. In S24, the current change detection flag is set to "ON". "ON" corresponds to "the change in the current of the electric motor 7A is detected". After the current change detection flag is set to "ON" in S24, the processing proceeds to END.

On the other hand, if "NO" is determined in S23, i.e., the voltage is determined not to increase for the predetermined time, the processing proceeds to S25. In S25, the current change detection portion 33 determines whether the current change detection flag is "ON". If "NO" is determined in S25 i.e., the current change detection flag is determined not to be "ON" (determined to be "OFF"), the processing proceeds to S26. In S26, the current change detection flag is kept at the "previous value". Then, the processing proceeds to END. On the other hand, if "YES" is determined in S25, i.e., the current change detection flag is determined to be "ON", the processing proceeds to S27. In S27, the current change detection portion 33 determines whether the gradient of the current a predetermined time ago is a reduction gradient. The predefined time for calculating the reduction gradient of the current can be, for example, the shortest time taken until the current reduces to a value corresponding to the load with an allowable maximum increase in the voltage. If "NO" is determined in S27, i.e., the gradient of the current the predetermined time ago is determined not to be a reduction gradient, the processing proceeds to S26. On the other hand, if "YES" is determined in S27, i.e., the gradient of the current the predetermined time ago is determined to be a reduction gradient, the processing proceeds to S28. In S28, the current change detection portion 33 determines whether the present gradient of the current is an increase gradient. The time for calculating the increase gradient of the current (the predetermined time) can be set to, for example, a time that can eliminate the influence of noise and lead to no problem even with an excessive thrust force. If "NO" is determined in S28, i.e., the present gradient of the current is determined not to be an increase gradient, the processing proceeds to S26. On the other hand, if "YES" is determined in S28, i.e., the present gradient of the current is determined to be an increase gradient, the processing proceeds to S22.

In this manner, the current change detection portion 33 determines that the current changes according to an increase in the voltage if "the motor driving signal (the previous value) is the application (Apply) or the motor brake after the application (MBK after Apply) and the voltage increases for the predetermined time". In this case, the current change detection flag is set to ON. Then, if "the gradient of the current the predetermined time ago is a reduction gradient and the present gradient of the current is an increase gradient" after the current change detection flag is set to ON, the current change detection portion 33 determines that the change in the current is converged and sets the current change detection flag to OFF. On the other hand, if "the gradient of the current the predetermined time ago is not a reduction gradient or the present gradient of the current is not an increase gradient" after the current change detection flag is set to ON, the current change detection portion 33 determines that the change in the current is ongoing and keeps the current change detection flag in the ON state (holds the previous value). On the other hand, unless "the motor driving signal (the previous value) is the application (Apply) or the motor brake after the application (MBK after Apply)", the change in the current does not have to be detected and therefore the current change detection flag is set to OFF. On the other hand, if the voltage does not increase for the predetermined time and the current change detection flag (the previous value) is OFF, the brake apparatus is in a state that the voltage does not increase or in a state of determining the change in the current and therefore the current change detection flag is kept in an OFF state (the previous value is held).

The convergence of the change in the current may be determined based on, for example, a reduction in the gradient of the current to the maximum current gradient exhibited when the pads are pressed. However, the gradient of the current changes according to a disturbance such as the hydraulic pressure, and therefore the convergence of the change in the current is preferably determined based on a transition from the reduction gradient to the increase gradient. Further, the detection of the change in the current may be determined based on increases in the voltage and the current for a predetermined time.

Next, if no change in the current is detected while the increase in the load is detected, the current estimated thrust force calculation portion 34 determines that the thrust force can be accurately estimated based on the current and calculates the estimated thrust force (the current). To fulfill this function, as illustrated in Fig. 4, the "current (monitored current) from the current sensor portion 29", the "load increase detection flag (ON/OFF) from the load increase detection portion 32", and the "current change detection flag (ON/OFF) from the current change detection portion 33" are input to the current estimated thrust force calculation portion 34. The current estimated thrust force calculation portion 34 estimates (calculates) the thrust force using the current based on the current (the current value), the load increase detection flag, and the current change detection flag, and outputs the "estimated thrust force (the current)", which is a result of this estimation, to the pad stiffness learning portion 37, the stroke estimated thrust force calculation portion 38, and the application completion determination portion 39. When no change occurs in the current, the thrust force can be accurately estimated based on the current, and therefore the current estimated thrust force calculation portion 34 calculates the estimated thrust force (the current) based on the current.

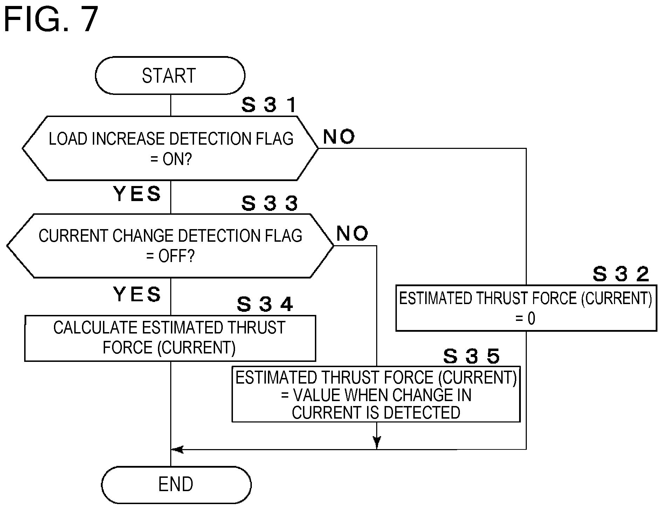

Fig. 7 illustrates processing for calculating the estimated thrust force (the current) that is performed by the current estimated thrust force calculation portion 34. The processing illustrated in Fig. 7 is also repeatedly performed per predetermined control period (for example, 10 ms). After the processing in Fig. 7 is started, in S31, the current estimated thrust force calculation portion 34 determines whether the load increase detection flag is "ON". If "NO" is determined in S31, i.e., the load increase detection flag is determined not to be "ON" (determined to be "OFF"), the processing proceeds to S32. In S32, the estimated thrust force (the current) is cleared, i.e., the estimated thrust force (the current) is set to zero. Then, the processing proceeds to END. On the other hand, if "YES" is determined in S31, i.e., the load increase detection flag is determined to be "ON", the processing proceeds to S33. In S33, the current estimated thrust force calculation portion 34 determines whether the current change detection flag is "OFF". If "YES" is determined in S33, i.e., the current change detection flag is determined to be "OFF", the processing proceeds to S34. In S33, the estimated thrust force (the current) is calculated. The estimated thrust force (the current) can be calculated according to the following equation 2.

$$\text{estimated thrust force (current)} = \text{Max}(I \times K \times \text{efficiency} \times \text{gear ratio} \times \text{lead, previous value of estimated thrust force (current)}) \qquad \text{[Equation 2]}$$

In the equation 2, "I" represents the current, and "K" represents the torque constant. The estimated thrust force (the current) is compared with the previous value by Max processing, because the thrust force does not reduce when the nut (the linear motion member 8A2) is pressed and advanced. In other words, for the estimated thrust force (the current), a larger value of the present value calculated in the present control period and the previous value calculated in the previous control period is employed as a present calculated value. After the estimated thrust force (the current) is calculated in S34, the processing proceeds to END. On the other hand, if "NO" is determined in S33, i.e., the current change detection flag is determined not to be "OFF" (determined to be "ON"), the processing proceeds to S35. In S35, the estimated thrust force (the current) is set to a value at the time of the start of the detection of the change in the current, and the processing proceeds to END.

In this manner, if "the load increase detection flag is OFF", the current estimated thrust force calculation portion 34 clears the estimated thrust force (the current) to zero because no load is generated due to the application operation. On the other hand, if "the load detection flag is ON and the current change detection flag is OFF", the current estimated thrust force calculation portion 34 determines that "the load is generated and the thrust force can be accurately estimated based on the current", thereby calculating the estimated thrust force (the current) according to the equation 2.

On the other hand, if "the load detection flag is ON and the current change detection flag is ON", the current estimated thrust force calculation portion 34 determines that the thrust force cannot be estimated based on the current, thereby holding the value at the time of the start of the detection of the change in the current for the estimated thrust force (the current) to prevent early completion of the application due to the change in the current. An estimated thrust force (a current) corresponding to the time for determining the change in the current is stored in a variable or an array for a previous value when the current change detection flag is OFF to allow the estimated thrust force (the current) to be set to the value at the time of the start of the detection of the change in the current when the current change detection flag is ON.

Next, the stroke calculation portion 35 converts an integrated value of the motor rotational speed calculated based on the voltage and the current into the stroke while the increase in the load is detected. To fulfill this function, as illustrated in Fig. 4, the "current (monitored current) from the current sensor portion 29", the "voltage (monitored voltage) from the voltage sensor portion 30", and the "load increase detection flag (ON/OFF) from the load increase detection portion 32" are input to the stroke calculation portion 35. The stroke calculation portion 35 calculates a stroke amount of the rotation-linear motion conversion mechanism 8 (the linear motion member 8A2) based on the current (the current value), the voltage (the voltage value), and the load increase detection flag, and outputs the "stroke", which is a result of this calculation, to the pad stiffness learning portion 37 and the stroke estimated thrust force calculation portion 38. The stroke calculation portion 35 estimates the stroke to be used to calculate the estimated thrust force (the stroke) and calculate the pad stiffness based on the voltage and the current.

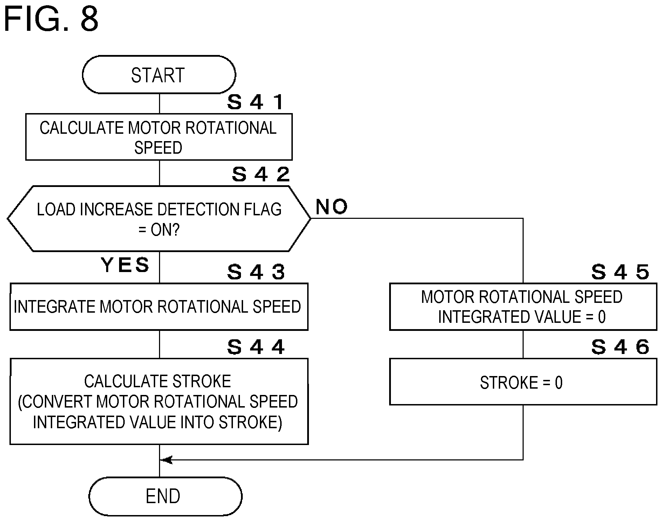

Fig. 8 illustrates processing for calculating the stroke that is performed by the stroke calculation portion 35. The processing illustrated in Fig. 8 is also repeatedly performed per predetermined control period (for example, 10 ms). After the processing illustrated in Fig. 8 is started, in S41, the motor rotational speed is calculated. The motor rotational speed can be calculated according to the following equation 3.

[Equation 3]

$$\text{motor rotational speed} = (V - Ldi/dt - RI) \div K$$

In the equation 3, "V", "L", "R", "I", and "K" represent the voltage, the inductance, the resistance, the current, and the torque constant, respectively. In S42 subsequent to S41, the stroke calculation portion 35 determines whether the load increase detection flag is "ON". If "YES" is determined in S42, i.e., the load increase detection flag is determined to be "ON", the processing proceeds to S43 and S44. In other words, the motor rotational speed is integrated in S43, and the stroke is calculated in S44 subsequent thereto. Then, the processing proceeds to END. The stroke can be calculated according to the following equation 4.

[Equation 4]

$$\text{stroke} = \text{integrated value of motor rotational speed} \div \text{reduction ratio} \times \text{lead}$$

On the other hand, if "NO" is determined in S42, i.e., the load increase detection flag is determined not to be "ON"(determined to be "OFF"), the processing proceeds to S45 and S46. In other words, the motor rotational speed integrated value is cleared in S45, and the stroke is cleared in S46. Then, the processing proceeds to END.

In this manner, the stroke calculation portion 35 calculates the motor rotational speed according to the equation 3. Then, if the load increase detection flag is ON, the motor rotational speed is integrated, and then the motor rotational speed integrated value is converted into the stroke according to the equation 4 after that. On the other hand, if the load increase detection flag is OFF, the load does not increase and the stroke does not have to be calculated, and therefore the motor rotational speed integrated value and the stroke are cleared to zero. A value measured using a rotational sensor or a stroke sensor may be used as the stroke. However, this leads to a cost increase, and therefore the stroke is preferably calculated based on the current and the voltage.

Next, the pad temperature estimation portion 36 calculates a pad temperature estimated value based on the vehicle speed, the WC pressure, and a temperature increase estimated value and a heat loss temperature estimated value estimated from the ambient temperature. To fulfill this function, as illustrated in Fig. 4, the "WC pressure from the WC pressure sensor 21", the "wheel speed from the wheel speed sensor", and the "ambient temperature from the temperature sensor" are input to the pad temperature estimation portion 36. The pad temperature estimation portion 36 estimates (calculates) the pad temperature based on the WC pressure, the vehicle speed (the wheel speed), and the ambient temperature, and outputs the "pad temperature estimated value", which is a result of this estimation, to the pad stiffness learning portion 37 and the stroke estimated thrust force calculation portion 38. The pad temperature estimation portion 36 estimates the pad temperature to determine the pad stiffness after the temperature characteristic at the time of the calculation of the estimated thrust force (the stroke) is taken into consideration (temperature characteristic-considered pad stiffness).

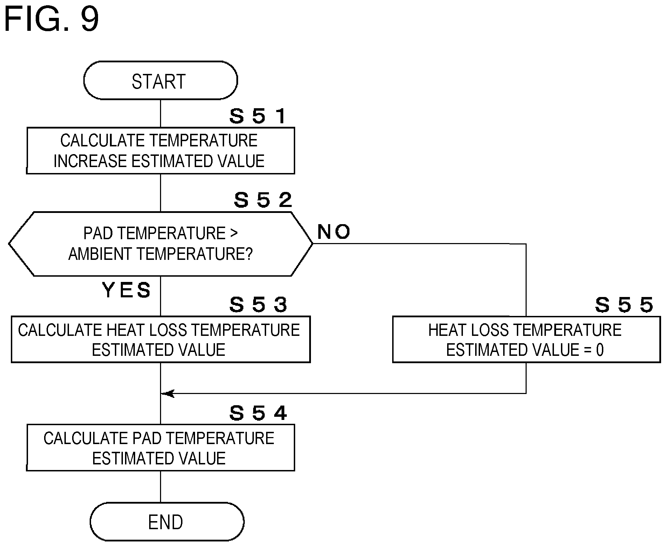

Fig. 9 illustrates processing for estimating the pad temperature that is performed by the pad temperature estimation portion 36. The processing illustrated in Fig. 9 is also repeatedly performed per predetermined control period (for example, 10 ms). After the processing illustrated in Fig. 9 is started, in S51, the temperature increase estimated value is calculated. The temperature increase estimated value can be calculated according to the following equation 5.

temperature increase estimated value = vehicle speed × WC pressure × temperature increase coefficient     [Equation 5]

Now, deceleration at the time of the brake is determined based on the frictional coefficient between the brake pads 6C and the disk rotor 4. In this case, the deceleration is generated with the aid of a conversion of motion energy into thermal energy due to the friction, and therefore an increase in the frictional coefficient also leads to an increase in the amount converted into the thermal energy, thereby also resulting in an increase in the temperature increase amount. Therefore, the temperature increase coefficient is set according to the frictional coefficient between the brake pads 6C and the disk rotor 4.

In S52 subsequent to S51, the pad temperature estimation portion 36 determines whether the pad temperature is higher than the ambient temperature. If "YES" is determined in S52, i.e., the pad temperature is determined to be higher than the ambient temperature, the processing proceeds to S53. In S53, the heat loss temperature estimated value is calculated. The heat loss temperature estimated value can be calculated according to the following equation 6.

heat loss temperature estimated value = (pad temperature - ambient temperature) × (vehicle speed + a) × heat loss coefficient     [Equation 6]

How heat is lost varies depending on a convective velocity of air passing through around the brake pads 6C, i.e., the vehicle speed. In the equation 6, "a" is added to the vehicle speed. A purpose therefor is to use "a" for an offset because heat is lost due to natural convection even at a vehicle speed of 0 m/s. Further, the heat loss also varies depending on the temperature difference, as the disappearance of the temperature difference between the brake pads 6C and the surroundings leads to a thermal equilibrium state in which no heat quantity is exchanged, thereby resulting in a stop of the change in the temperature. Further, the heat loss coefficient also varies depending on the material of the brake pads 6C and a transfer area when the quantity of heat is exchanged, i.e., the area of the pad. Therefore, the heat loss coefficient is set according to the specifications such as the area of the pad, and the heat loss temperature is estimated based on the temperature difference from the surroundings around the pad and the heat loss coefficient. After the heat loss temperature estimated value is calculated in S53, the processing proceeds to S54. In S54, the pad temperature estimated value is calculated. The pad temperature estimated value can be calculated according to the following equation 7.

pad temperature estimated value = pad temperature estimated value (previous value) + temperature increase estimated value - heat loss temperature estimated value     [Equation 7]

After the pad temperature estimated value is calculated in S54, the processing proceeds to END. On the other hand, if "NO" is determined in S52, i.e., the pad temperature is determined to be lower than the ambient temperature, the processing proceeds to S55. In S55, the heat loss temperature estimated value is set to zero. After the heat loss temperature estimated value is set to zero in S55, the processing proceeds to S54.

In this manner, the pad temperature estimation portion 36 calculates the temperature increase estimated value of the pad temperature due to the brake friction according to the equation 5. Then, if the pad temperature is higher than the ambient temperature, a heat loss occurs and therefore the heat loss temperature estimated value is calculated according to the equation 6. On the other hand, if the pad temperature is equal to or lower than the ambient temperature, no heat loss occurs and therefore the heat loss temperature estimated value is cleared to zero. After that, the pad temperature estimated value is calculated according to the equation 7. In a case where the frictional coefficient largely changes according to the pad temperature, the temperature increase coefficient set according to the frictional coefficient may also be set using a MAP to which the pad temperature is input. Further, the temperature increase coefficient should be set abreast of the ever-changing temperature. When the temperature increase coefficient increases, the temperature increase estimated value also increases, but this is an appropriate calculation as the temperature increase estimated value at that time, and no problem lies in it.

Next, the pad stiffness learning portion 37 calculates a learned value of the pad stiffness (a thrust force change amount with respect to a stroke change amount) based on the estimated thrust force (the current) and the stroke when no change occurs in the current and the change in the WC pressure is small while the load increase is detected. Further, the pad stiffness learning portion 37 latches (holds) the pad temperature estimated value corresponding to the moment that the pad stiffness is calculated to reflect a change in the stiffness according to the pad temperature. To fulfill this function, as illustrated in Fig. 4, the "estimated thrust force (the current) from the current estimated thrust force calculation portion 34", the "current change detection flag (ON/OFF) from the current change detection portion 33", the "stroke from the stroke calculation portion 35", the "WC pressure from the WC pressure sensor 21", the "pad temperature estimated value from the pad temperature estimation portion 36", an "application completion flag (the previous value) from the application completion determination portion 39", and the "motor driving signal (the previous value) from the motor driving signal calculation portion 40" are input to the pad stiffness learning portion 37. The pad stiffness learning portion 37 calculates the learned value of the pad stiffness based on the estimated thrust force (the current), the current change detection flag, the stroke, the WC pressure, the pad temperature estimated value, the application completion flag (the previous value), and the motor driving signal (the previous value), and outputs the "pad stiffness learned value" and a "pad stiffness already learned flag (ON/OFF)", which are a result of this calculation, to the stroke estimated thrust force calculation portion 38. The pad stiffness learning portion 37 learns the pad stiffness (the thrust force change amount with respect to the stroke change amount) to be used to calculate the estimated thrust force (the stroke).

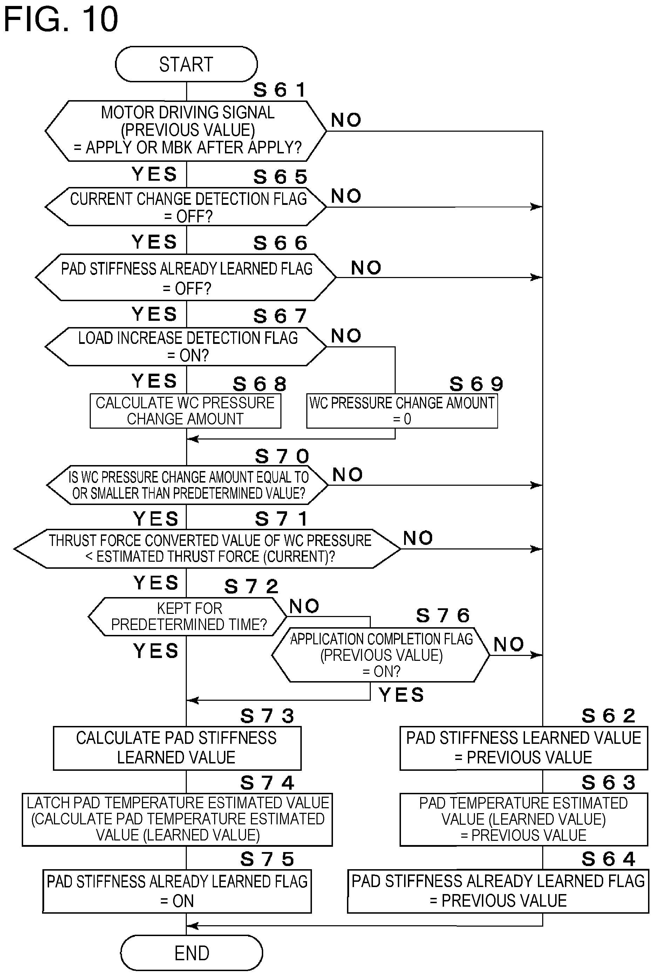

Fig. 10 illustrates processing for learning the pad stiffness that is performed by the pad stiffness learning portion 37. The processing illustrated in Fig. 10 is also repeatedly performed per predetermined control period (for example, 10 ms). After the processing illustrated in Fig. 10 is started, in S61, the pad stiffness learning portion 37 determines whether the motor driving signal (the previous value) corresponding to the motor driving state is the application (Apply) or the motor brake after the application (MBK after Apply). This processing is processing similar to the processing in step S1 in Fig. 5 and S21 in Fig. 6. If "NO" is determined in S61, i.e., the motor driving signal (the previous value) is determined not to be the application or the motor brake after the application, the processing proceeds to S62, S63, and S64. In other words, the pad stiffness learned value is kept at the previous value in S62, the pad temperature estimated value (the learned value) is kept at the previous value in S63, and the pad stiffness already learned flag is kept at the previous value in S64. Then, the processing proceeds to END.

On the other hand, if "YES" is determined in S61, i.e., the motor driving signal (the previous value) is determined to be the application or the motor brake after the application, the processing proceeds to S65. In S65, the pad stiffness learning portion 37 determines whether the current change detection flag is "OFF". If "NO" is determined in S65, i.e., the current change detection flag is determined not to be "OFF" (determined to be "ON"), the processing proceeds to S62. The learned value is not updated during the change in the current in which the estimated thrust force (the current) cannot be accurately estimated to improve the accuracy of calculating the pad stiffness. On the other hand, if "YES" is determined in S65, i.e., the current change detection flag is determined to be "OFF", the processing proceeds to S66. In S66, the pad stiffness learning portion 37 determines whether the pad stiffness already learned flag is "OFF". If "NO" is determined in S66, i.e., the pad stiffness already learned flag is determined not to be "OFF" (determined to be "ON"), the processing proceeds to S62. On the other hand, if "YES" is determined in S66, i.e., the pad stiffness already learned flag is determined to be "OFF", the processing proceeds to S67.

In S67, the pad stiffness learning portion 37 determines whether the load increase detection flag is "ON". If "YES" is determined in S67, i.e., the load increase detection flag is determined to be "ON", the processing proceeds to S68. In S68, the WC pressure change amount is calculated. The WC pressure change amount can be calculated as, for example, a difference between a WC pressure maximum value and a WC pressure minimum value since the load increase detection flag is set to ON. On the other hand, if "NO" is determined in S67, i.e., the load increase detection flag is determined not to be "ON" (determined to be "OFF"), the processing proceeds to S69. In step S69, the WC pressure change amount is set to zero. After the WC pressure change amount is calculated in S68 or the WC pressure change amount is set to zero in S69, the processing proceeds to S70. In step S70, the pad stiffness learning portion 37 determines whether the WC pressure change amount is equal to or smaller than a predetermined value. The predetermined value can be set as, for example, a determination value required to accurately acquire the learned value of the pad stiffness (the thrust force change amount with respect to the stroke change amount). If "YES" is determined in S70, i.e., the WC pressure change amount is determined to be equal to or smaller than the predetermined value, the processing proceeds to S71. In S71, the pad stiffness learning portion 37 determines whether a thrust force converted value of the WC pressure is smaller than the estimated thrust force (the current). If "YES" is determined in S71, i.e., the thrust force converted value of the WC pressure is determined to be smaller than the estimated thrust force (the current), the processing proceeds to S72. On the other hand, if "NO" is determined in S70, i.e., the WC pressure change amount is determined to be larger than the predetermined value, or if "NO" is determined in S71, i.e., the thrust force converted value of the WC pressure is determined to be equal to or larger than the estimated thrust force (the current), the processing proceeds to S62. Due to that, during the change in the WC pressure in which the thrust force applied to the nut (the linear motion member 8A2) loses stability or while the thrust force converted value of the WC pressure is equal to or larger than the estimated thrust force (the current), the brake apparatus is in a state that the pads are pressed by the hydraulic pressure and the thrust force cannot be accurately estimated, and therefore the pad stiffness learned value is refrained from being updated.

In S72, the pad stiffness learning portion 37 determines whether the brake apparatus is kept in a state required to accurately acquire the learned value of the pad stiffness (the thrust force change amount with respect to the stroke change amount) for a predetermined time. In other words, in S72, the pad stiffness learning portion 37 determines whether the brake apparatus is kept in a state that "YES" is determined in all of S61, S65, S66, S70, and S71 for the predetermined time. The predetermined time can be set as, for example, a time required to accurately acquire the learned value of the pad stiffness (the thrust force change amount with respect to the stroke change amount). If "YES" is determined in S72, i.e., the brake apparatus is determined to be kept in the above-described state for the predetermined time, the processing proceeds to S73. In S73, the pad stiffness learned value is calculated. The pad stiffness learned value can be calculated according to the following equation 8.

pad stiffness learned value = estimated thrust force (current) change amount/stroke change amount        [Equation 8]

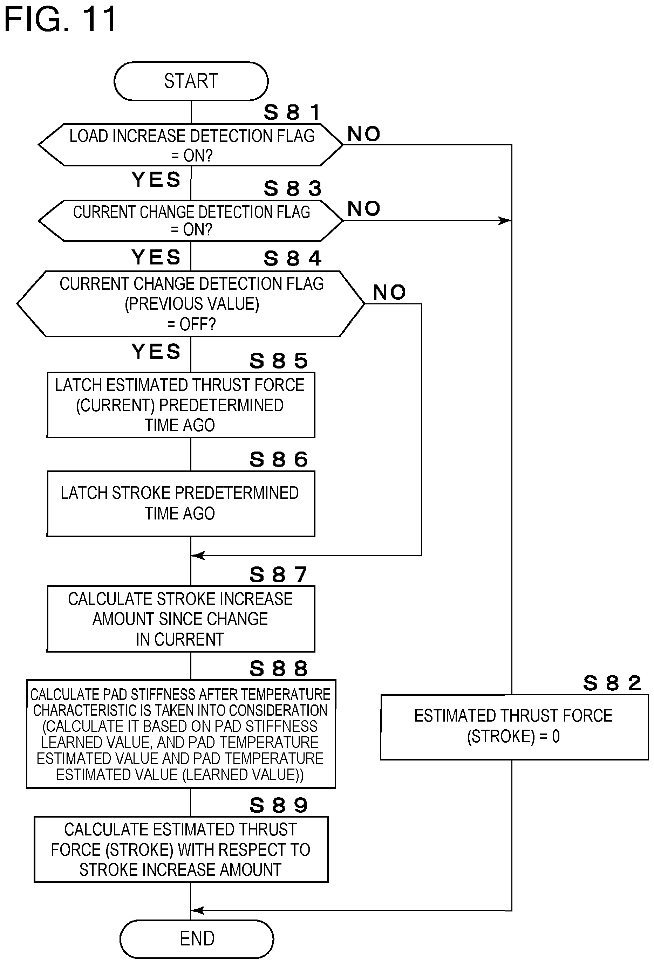

The "stroke change amount" and the "estimated thrust force (current) change amount" in the equation 8 are the stroke amount and the estimated thrust force (the current) changed during the "predetermined time" used in S72. After the pad stiffness learned value is calculated in S73, the processing proceeds to S74. In S74, the pad temperature estimated value is latched. More specifically, in S74, the pad temperature estimated value at the time of the calculation of the pad stiffness learned value in S73 is latched to take a change in the stiffness according to the pad temperature difference at the time of the learning of the pad stiffness into consideration when the estimated thrust force based on the stroke is calculated (at the time of the processing for calculating the estimated thrust force (the stroke) in Fig. 11, which will be described below). In other words, the pad stiffness learned value and the pad temperature estimated value are stored (recorded) in association with each other. In S75 subsequent to S74, the pad stiffness already learned flag is set to ON. Then, the processing proceeds to END.

On the other hand, if "NO" is determined in S72, i.e., the brake apparatus is determined not to be kept in the above-described state for the predetermined time, the processing proceeds to S76. In S76, the pad stiffness learning portion 37 determines whether the application completion flag (the previous value) is ON. The application completion flag (the previous value) is input from the application completion determination portion 39 to the pad stiffness learning portion 37 via the 1/z portion 42. If "YES" is determined in S76, i.e., the application completion flag (the previous value) is determined to be ON, the processing proceeds to S73. In this case, in S73, the pad stiffness learned value is calculated based on the amount of a change made until a task at which the application completion flag is set to ON, using the estimated thrust force (the current) (the previous value) and the stroke (the previous value). On the other hand, if "NO" is determined in S76, i.e., the application completion flag is determined to be OFF, the processing proceeds to S62.

In this manner, if "the motor driving signal (the previous value) is the application (Apply) or the motor brake after the application (MBK after Apply), the current change detection flag is OFF, the WC pressure change amount is equal to or smaller than the predetermined value, and the thrust force converted value of WC is kept in the state smaller than the estimated thrust force (the current) for the predetermined time", the pad stiffness learning portion 37 calculates the pad stiffness learned value according to the equation 8 using the stroke amount and the estimated thrust force (the current) changed during this predetermined time. Then, the pad stiffness already learned flag is set to ON. On the other hand, if the application completion flag (the previous value) is set to ON before the predetermined time has elapsed, the pad stiffness learned value is calculated based on the amount of change made until the task at which the application completion flag is set to ON using the estimated thrust force (the current) (the previous value) and the stroke (the previous value). In either case, i.e., when the pad stiffness learned value is calculated, the pad temperature estimated value at the moment that this pad stiffness learned value is calculated is latched (held). On the other hand, under a condition other than the above-described states, the calculation of the pad stiffness learned value is unnecessary or impossible, and therefore the pad stiffness learned value, the pad temperature estimated value (the learned value), and the pad stiffness already learned flag are held without being changed from the previous values.

Further, in consideration of a possibility that the learning of the pad stiffness and the change in the current accompanying the increase in the voltage do not occur in the same trip (since the ECU is started up once until the ECU is shut down), the pad stiffness learned value and the pad temperature estimated value (the learned value) are stored into a nonvolatile memory such as an EEPROM. Further, the pad stiffness learned value and the pad temperature estimated value (learned value) are stored at a timing when the application is completed to prevent them from becoming unable to be stored in the EEPROM due to an unexpected shutdown or the like. Further, it is also possible that the pad stiffness learned value has never been calculated since the startup and the value stored in the EEPROM is unusable (no value can be normally written therein or read therefrom). In this case, initial values of learned values of the pad stiffness and the pad temperature are set in advance to avoid insufficiency of the thrust force at the time of the completion of the application due to the change in the current. These initial values of the learned values can be pad stiffness and the pad temperature when the pad stiffness after the temperature characteristic is taken into consideration is minimized.

The thrust force increase amount with respect to the stroke increase amount is defined as the pad stiffness in the present processing, but, for example, the relationship between the stroke and the thrust force may be stored each time and an absolute value thereof may be defined as a pad stiffness MAP. However, it is preferable to define the pad stiffness as the change amount in view of the processing load. Further, a change in the WC pressure also causes a change in the thrust force applied to the pad. Therefore, the pad stiffness learned value is calculated only when the WC pressure change amount is small in the present processing. However, whether the pad stiffness learned value can be calculated may be determined based on a signal from which the WC pressure change can be detected, such as a brake pedal stroke or a hydraulic instruction from the vehicle system.

Next, if the change in the current is detected after the increase in the load is detected, the stroke estimated thrust force calculation portion 38 calculates the estimated thrust force (the stroke) based on the pad stiffness learned value, the pad temperature estimated value, and the estimated thrust force (the current) before the change in the current. To fulfill this function, as illustrated in Fig. 4, the "load increase detection flag (ON/OFF) from the load increase detection portion 32", the "current change detection flag (ON/OFF) from the current change detection portion 33", the "estimated thrust force (the current) from the current estimated thrust force calculation portion 34", the "stroke from the stroke calculation portion 35", the "pad temperature estimated value from the pad temperature estimation portion 36", and the "pad stiffness learned value and the pad stiffness already learned flag (ON/OFF) from the pad stiffness learning portion 37" are input to the stroke estimated thrust force calculation portion 38. The stroke estimated thrust force calculation portion 38 estimates (calculates) the thrust force using the stroke based on the load increase detection flag, the current change detection flag, the estimated thrust force (the current), the stroke, the pad temperature estimated value, the pad stiffness learned value, and the pad stiffness already learned flag, and outputs the "estimated thrust force (stroke)", which is a result of this estimation, to the application completion determination portion 39. If the change in the current is ongoing, the stroke estimated thrust force calculation portion 38 cannot accurately estimate the estimated thrust force (the current) and therefore calculates the estimated thrust force (the stroke) using the stroke.

Fig. 11 illustrates processing for calculating the estimated thrust force (the stroke) that is performed by the stroke estimated thrust force calculation portion 38. The processing illustrated in Fig. 11 is also repeatedly performed per predetermined control period (for example, 10 ms). After the processing in Fig. 11 is started, in S81, the stroke estimated thrust force calculation portion 38 determines whether the load increase detection flag is "ON". If "NO" is determined in S81, i.e., the load increase detection flag is determined not to be "ON" (determined to be "OFF"), the processing proceeds to S82. In S82, the estimated thrust force (the stroke) is set to zero. Then, the processing proceeds to END. On the other hand, if "YES" is determined in S81, i.e., the load increase detection flag is determined to be "ON", the processing proceeds to S83. In S83, the stroke estimated thrust force calculation portion 38 determines whether the current change detection flag is "ON". If "NO" is determined in S83 i.e., the current change detection flag is determined not to be "ON" (determined to be "OFF"), the processing proceeds to S82.

On the other hand, if "YES" is determined in S83, i.e., the current change detection flag is determined to be "ON", the processing proceeds to S84. In S84, the stroke estimated thrust force calculation portion 38 determines whether the current change detection flag (the previous value) is "OFF". If "NO" is determined in S84, i.e., the current change detection flag (the previous value) is determined not to be "OFF" (determined to be "ON"), the processing proceeds to S87. On the other hand, if "YES" is determined in S84, i.e., the current change detection flag (the previous value) is determined to be "OFF", the processing proceeds to S85 and S86. In S85, the estimated thrust force (the current) a predetermined time ago is latched (held). In S86, the stroke the predetermined time ago is latched (held). The predetermined time is set to the same time as the determination time used when the current change detection flag is set to ON. In S87, the stroke increase amount since the change in the current is calculated. The stroke increase amount can be calculated according to the following equation 9.

[Equation 9]

$$\text{stroke increase amount} = \text{stroke} - \text{stroke (latched value)}$$

The thrust force increase amount for calculating the estimated thrust force (the stroke) is calculated as an amount by which the thrust force increases since the timing when the estimated thrust force (the current) is latched (held). Therefore, a difference of the present stroke from the latched stroke value is used as the stroke increase amount for calculating the thrust force increase amount. In S88 subsequent to S87, the pad stiffness after the temperature characteristic is taken into consideration, i.e., the temperature characteristic-considered pad stiffness learned value is calculated. The temperature characteristic-considered pad stiffness learned value can be calculated according to the following equation 10.

temperature characteristic-considered pad stiffness learned value = pad stiffness learned value + pad stiffness temperature characteristic correction value   [Equation 10]

The "pad stiffness temperature characteristic correction value" in the equation 10 is a correction value according to the temperature characteristic of the pad stiffness that is added to the pad stiffness learned value. The pad stiffness temperature characteristic correction value is calculated as a difference of the pad stiffness according to the temperature change amount after the temperature change amount is calculated from a difference of the pad temperature estimated value based on the pad temperature estimated value (the learned value) according to the characteristic of the pad stiffness with respect to the pad temperature. In S89 subsequent to S88, the estimated thrust force (the stroke) with respect to the stroke increase amount is calculated. The estimated thrust force (the stroke) can be calculated according to the following equation 11.

estimated thrust force (stroke) = Max(estimated thrust force (current) (latched value) + temperature characteristic-considered pad stiffness learned value $\times$ stroke increase amount, previous value of estimated thrust force (stroke)) [Equation 11]

The estimated thrust force (the stroke) is compared with the previous value by Max processing, because the thrust force does not reduce when the nut (the linear motion member 8A2) is pressed and advanced. In other words, for the estimated thrust force (the stroke), a larger value of the present value calculated in the present control period and the previous value calculated in the previous control period is employed as a present calculated value. On the other hand, if the pad stiffness already learned flag is OFF, the estimated thrust force (the stroke) is calculated using the pad stiffness learned value stored in the EEPROM. After the estimated thrust force (the stroke) is calculated in S89, the processing proceeds to END.

In this manner, the stroke estimated thrust force calculation portion 38 latches (holds) the estimated thrust force (the current) and the stroke acquired the predetermined ago at the timing when the load increase detection flag is set to ON and the current change detection flag is set to ON. Then, the estimated thrust force (the stroke) is calculated based on the stroke increase amount and the temperature characteristic-considered pad stiffness learned value subsequent to the change in the current, since the current change detection flag is set to ON until the load increase detection flag is set to OFF. The stroke increase amount is calculated according to the equation 9. The temperature characteristic-considered pad stiffness learned value is calculated according to the equation 10. The estimated thrust force (the stroke) is calculated according to the equation 11. On the other hand, if the load increase detection flag is OFF, the load does not increase and therefore the estimated thrust force (the stroke) is cleared to zero. On the other hand, if the current change detection flag is OFF, the thrust force estimated based on the current, i.e., the estimated thrust force (the current) is used to determine the completion of the application, and therefore the estimated thrust force (the stroke) is cleared to zero. The pad stiffness temperature characteristic correction value may be calculated using a pad stiffness MAP corresponding to the temperature according to each level of stiffness (low stiffness, normal stiffness, or high stiffness).

Next, the application completion determination portion 39 compares the estimated trust force (the current) or the estimated thrust force (the stroke) with the target thrust force according to the result of the detection of the change in the current, thereby determining whether to complete the application. To fulfill this function, as illustrated in Fig. 4, the "estimated thrust force (the current) from the current estimated thrust force calculation portion 34", the "current change detection flag (ON/OFF) from the current change detection portion 33", the "estimated thrust force (the stroke) from the stroke estimated thrust force calculation portion 38", and the "motor driving signal (the previous value) from the motor driving signal calculation portion 40" are input to the application completion determination portion 39. The application completion determination portion 39 determines whether the application is completed based on the estimated thrust force (the current), the current change detection flag, the estimated thrust force (the stroke), and the motor driving signal (the previous value), and outputs the application completion flag (ON/OFF), which is a result of this determination, to the motor driving signal calculation portion 40. Further, the application completion determination portion 39 outputs the application completion flag to the pad stiffness learning portion 37 via the 1/z portion 42. The application completion determination portion 39 determines whether the thrust force required to stop the vehicle is generated by the electric parking brake (the rotation-linear motion conversion mechanism 8).

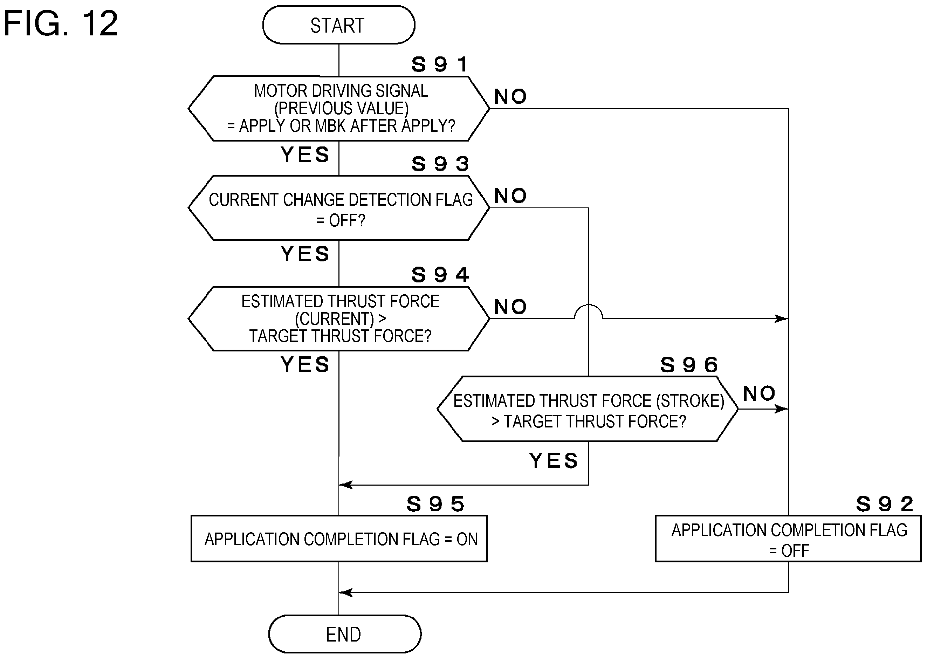

Fig. 12 illustrates processing for determining the completion of the application that is performed by the application completion determination portion 39. The processing illustrated in Fig. 12 is also repeatedly performed per predetermined control period (for example, 10 ms). After the processing illustrated in Fig. 12 is started, in S91, the application completion determination portion 39 determines whether the motor driving signal (the previous value) is the application (Apply) or the motor brake after the application (MBK after Apply). If "NO" is determined in S91, i.e., the motor driving signal (the previous value) is determined not to be the application or the motor brake after the application, the processing proceeds to S92. In S92, the application completion flag is set to "OFF". Then, the processing proceeds to END. On the other hand, if "YES" is determined in S91, i.e., the motor driving signal (the previous value) is determined to be the application or the motor brake after the application, the processing proceeds to S93. In S93, the application completion determination portion 39 determines whether the current change detection flag is "OFF". If "YES" is determined in S93, i.e., the current change detection flag is determined to be "OFF", the processing proceeds to S94.

In S94, the application completion determination portion 39 determines whether the estimated thrust force (the current) is greater than the target thrust force. The target thrust force is set to a value that allows the vehicle to be stopped based on the weight of the vehicle and the slope of the road surface. If "NO" is determined in S94, i.e., the estimated thrust force (the current) is determined to be equal to or smaller than the target thrust force, the processing proceeds to S92. On the other hand, if "YES" is determined in S94, i.e., the estimated thrust force (the current) is determined to be greater than the target thrust force, the processing proceeds to S95. In S95, the application completion flag is set to "ON". Then, the processing proceeds to END. On the other hand, if "NO" is determined in S93, i.e., the current change detection flag is determined not to be "OFF" (determined to be "ON"), the processing proceeds to S96. In S96, the application completion determination portion 39 determines whether the estimated thrust force (the stroke) is greater than the target thrust force. If "NO" is determined in S96, i.e., the estimated thrust force (the stroke) is determined to be equal to or smaller than the target thrust force, the processing proceeds to S92. On the other hand, if "YES" is determined in S96, i.e., the estimated thrust force (the stroke) is determined to be greater than the target thrust force, the processing proceeds to S95.

In this manner, if "the motor driving signal (the previous value) is the application (Apply) or the motor brake after the application (MBK after Apply)", the application completion determination portion 39 switches the estimated thrust force to be used to determine the completion of the application according to the current change flag in the following manner, and sets the application completion flag to ON when the estimated thrust force exceeds the target thrust force. That is, when the current change detection flag is OFF, the estimated thrust force (the current) is used to determine the completion of the application. This is because the thrust force can be accurately estimated based on the current when the current change detection flag is OFF. On the other hand, when the current change detection flag is ON, the estimated thrust force (the stroke) is used to determine the completion of the application. This is because the accuracy of the thrust force based on the current reduces when the current change detection flag is ON. On the other hand, unless "the motor driving signal (the previous value) is the application (Apply) or the motor brake after the application (MBK after Apply)", the application completion does not have to be determined, and then the application completion flag is set to OFF.

The completion of the application may be determined when any one of the estimated thrust force (the current) and the estimated thrust force (the stroke) exceeds the target thrust force. In this case, when the current change detection flag is OFF, the estimated thrust force (the current) is updated while the estimated thrust force (the stroke) is cleared to zero, and therefore the completion of the application is determined substantially based on the estimated thrust force (the current). On the other hand, when the current change detection flag is ON, the estimated thrust force (the current) is kept at the value immediately before the change in the current while the estimated thrust force (the stroke) is updated into a value resulting from adding the held estimated thrust force (the current) and the thrust force according to the stroke change amount during the change in the current, and therefore the completion of the application is determined substantially based on the estimated thrust force (the stroke).

Next, the motor driving signal calculation portion 40 calculates the motor driving signal using the application/release request (Apply Release Request), the result of the application completion determination, and the motor rotational speed. To fulfill this function, as illustrated in Fig. 4, the "application/release request (the PKB actuation request) based on the signal from the parking brake switch 23, the signal derived from the determination of the automatic application/automatic release, or the like" and the "application completion flag (ON/OFF) from the application completion determination portion 39" are input to the motor driving signal calculation portion 40. Further, the motor rotational speed is also input to the motor driving signal calculation portion 40, although not illustrated. The motor driving signal calculation portion 40 calculates the motor driving signal to output to the motor driving circuit 28, i.e., an instruction signal requesting power supply ON (drive the electric motor)/power supply OFF (stop the electric motor)/shorting (the electric motor brake) directed to the motor driving circuit 28 based on the application/release request, the application completion flag, and the motor rotational speed. The motor driving signal calculation portion 40 outputs the calculated motor driving signal to the motor driving circuit 28. Further, the motor driving signal calculation portion 40 outputs the calculated motor driving signal to the load increase detection portion 32, the current change detection portion 33, the pad stiffness learning portion 37, and the application completion determination portion 39 via the 1/z portion 41. The motor driving signal calculation portion 40 calculates the motor driving signal to issue an instruction to the motor driving circuit 28 and determine whether to perform various kinds of processing.

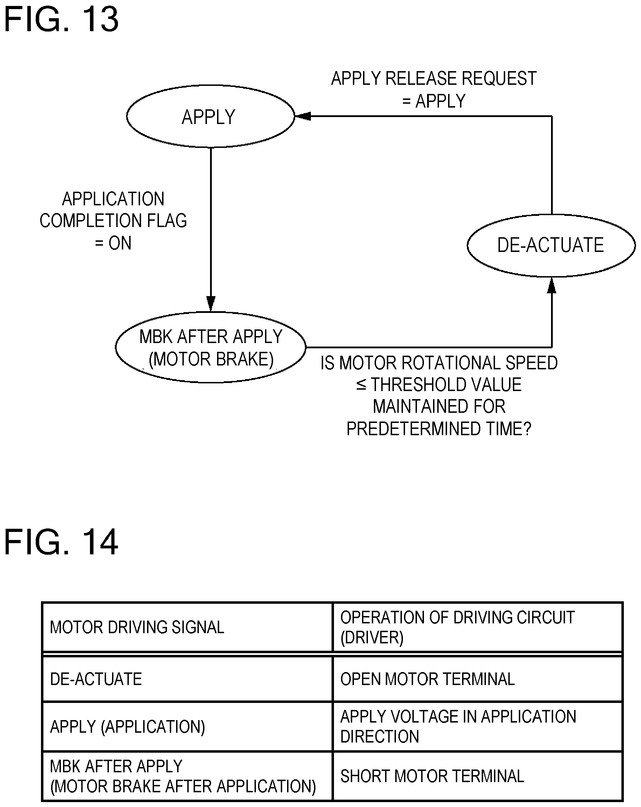

Fig. 13 illustrates processing for calculating the motor driving signal that is performed by the motor driving signal calculation portion 40. As illustrated in Fig. 13, if the application/release request is switched to the application (Apply Release Request = Apply) with the motor driving signal in the "de-actuation" state, the motor driving signal calculation portion 40 sets the motor driving signal to the "application (Apply)". If the application completion flag is switched to ON with the motor driving signal in the "application (Apply)" state, the motor driving signal calculation portion 40 sets the motor driving signal to the "motor brake after the application (MBK after Apply)". If the motor rotational speed is kept in a state of being equal to or lower than a threshold value for a predetermined time with the motor driving signal in the "motor brake after the application (MBK after Apply)" state, the motor driving signal calculation portion 40 sets the motor driving signal to the "de-actuation". The threshold value for the motor rotational speed is set to a value allowing a stop of the electric motor 7A to be determined even considering an error in monitoring the current and the voltage. Fig. 14 illustrates the operation of the motor driving circuit 28 in reaction to the motor driving signal.

In this manner, if the application request (Apply Release Request = Apply) is received when the motor driving signal is the "de-actuation", i.e., if the request for the application operation is received from the driver or the vehicle system, the motor driving signal calculation portion 40 sets the motor driving signal to the "application (Apply)". On the other hand, if the application completion flag is switched to ON due to generation of the thrust force required to stop the vehicle when the motor driving state is the "application (Apply)", the motor driving signal calculation portion 40 sets the motor driving signal to the "motor brake after the application (MBK after Apply)". On the other hand, if the motor rotational speed is slowed down by shorting the motor terminal when the motor driving signal is the "motor brake after the application (MBK after Apply), and the motor rotational speed is kept in the state equal to or lower than the threshold value for the predetermined time, the motor driving signal calculation portion 40 determines that the electric motor 7A is stopped and sets the motor driving signal to the "de-actuation". The relationship between the motor driving signal and the operation of the motor driving circuit 28 is as illustrated in Fig. 14. A time taken since the motor driving signal is switched to the "motor brake after the application (MBK after Apply)" until the electric motor 7A is necessarily stopped may be used as a condition for switching the motor driving signal from the "motor brake after the application (MBK after Apply) to the de-actuation. Further, a value measured using the rotational sensor may be used as the motor rotational speed, but this leads to a cost increase and therefore the motor rotational speed is preferably calculated based on the current and the voltage.

The motor driving signal corresponding to the motor driving state is input from the motor driving signal calculation portion 40 to the 1/z portion 41. The 1/z portion 41 outputs the "motor driving state (the previous value)", which is the previous value of the motor driving signal, to the load increase detection portion 32, the current change detection portion 33, the pad stiffness learning portion 37, and the application completion determination portion 39. The application completion flag (ON/OFF) is input from the application completion determination portion 39 to the 1/z portion 42. The 1/z portion 42 outputs the "application completion flag (the previous value)", which is the previous value of the application completion flag, to the pad stiffness learning portion 37.

In this manner, in the embodiment, the rear wheel-side disk brake 6 constitutes the brake apparatus together with the braking control apparatus 17 (the parking brake control apparatus 31). The rear wheel-side disk brake 6 includes the hydraulic mechanism (the caliper 6B and the piston 6D) and the parking brake mechanism (the electric motor 7A and the rotation-linear motion conversion mechanism 8). The braking control apparatus 17 (the parking brake control apparatus 31) includes the control portion (the arithmetic circuit 24) configured to control the electric motor 7A. The hydraulic mechanism provides the braking force to the vehicle by pressing the frictional member (the brake pads 6C) against the rotational member (the disk rotor 4) rotating together with the wheel (the rear wheel 3) using the hydraulic pressure. The parking brake mechanism holds the braking force by the electric motor 7A controlled by the control portion (the arithmetic circuit 24).

The braking control apparatus 17 (the parking brake control apparatus 31) constitutes the electric brake apparatus together with the rotation-linear motion conversion mechanism 8 and the electric motor 7A. In other words, the electric brake apparatus includes the rotation-linear motion conversion mechanism 8 as the electric mechanism, the electric motor 7A, and the braking control apparatus 17 (the parking brake control apparatus 31). The rotation-linear motion conversion mechanism 8 transmits the thrust force to the brake pads 6C serving as the braking member in the direction toward the disk rotor 4 serving as the braking target member to provide the braking force, and holds this thrust force. The electric motor 7A transmits the thrust force to the rotation-linear motion conversion mechanism 8. The braking control apparatus 17, more specifically, the parking brake control apparatus 31 controls the electric motor 7A. The parking braking control apparatus 31 detects the current value of the electric motor 7A, which provides the thrust force to the brake pads 6C, and controls the electric motor 7A. Then, the parking brake control apparatus 31 controls the electric motor 7A based on a "first estimated thrust force" acquired from a "first physical amount" and an "element regarding the stiffness" "when the current value changes according to the change in the voltage value applied to the electric motor 7A".

Now, "when the current value changes according to the change in the voltage value applied to the electric motor 7A" corresponds to, for example, when "NO" is determined in S93 in Fig. 12. The "first physical amount" is a physical amount corresponding to the electric motor rotational amount acquired based on the current value and the voltage value supplied to the electric motor 7A (S43 in Fig. 8), and corresponds to, for example, the "stroke (S44 in Fig. 8)". The "element regarding the stiffness" is an element regarding the stiffness including the stiffness of the brake pads 6C, and corresponds to, for example, the "pad stiffness learned value (S73 in Fig. 10)", more specifically, the "pad stiffness after the temperature characteristic is taken into consideration (S88 in Fig. 11)". The "first estimated thrust force" corresponds to the "estimated thrust force (the stroke) (S89 in Fig. 11)" acquired from the stroke and the pad stiffness learned value (more specifically, the pad stiffness after the temperature characteristic is taken into consideration).

In other words, according to the embodiment, the parking brake control apparatus 31 controls the electric motor 7A based on the "estimated thrust force (the stroke)" acquired from the "stroke corresponding to the electric motor rotational amount" and the "pad stiffness learned value (more specifically, the pad stiffness after the temperature characteristic is taken into consideration)" if "NO" is determined in S93 in Fig. 12. Further, the parking brake control apparatus 31 determines that the current value changes according to the change in the voltage value based on the increase in the voltage value (for example, S23 and S24 in Fig. 6). The parking brake control apparatus 31 determines that the current value does not change according to the convergence of the change in the current value (for example, S27, S28, and S22 in Fig. 6). In this case, the parking brake control apparatus 31 determines that the current value does not change when the current value starts increasing after reducing (for example, S28 and S22 in Fig. 6). The parking brake control apparatus 31 may determine that the current value does not change based on the fact that the gradient of the current value becomes gentle.

The parking brake control apparatus 31 determines that the current value changes according to the change in the voltage value based on the increases in the voltage and the current (for example, S31, S33, and S34 in Fig. 7). The parking brake control apparatus 31 controls the electric motor based on the "second estimated thrust force" when the voltage value does not increase. Then, when the voltage value does not increase corresponds to, for example, when "YES" is determined in S93 in Fig. 12. The "second estimated thrust force" is a thrust force acquired based on the current value supplied to the electric motor 7A, and corresponds to the "estimated thrust force (the current) (S35 in Fig. 7)". In other words, according to the embodiment, the parking brake control apparatus 31 controls the electric motor 7A based on the "estimated thrust force (the current)" if "YES" is determined in S93 in Fig. 12.

The parking brake control apparatus 31 stops the power supply to the electric motor 7A when the estimated thrust force (the stroke) corresponding to the first estimated thrust force or the estimated thrust force (the current) corresponding to the second estimated thrust force reaches the target thrust force (for example, S94, S96, and S95 in Fig. 12, and Fig. 13). The parking brake control apparatus 31 does not control (stop) the electric motor 7A based on the estimated thrust force (the stroke) or the estimated thrust force (the current), before the load imposed on the electric motor 7A increases due to the abutment of the linear motion member 8A2 of the rotation-linear motion conversion mechanism 8 with the brake pad 6C via the piston 6D serving as the pressing member, and the estimated thrust force (the current) increases due to the increase in the current value (for example, S10, S12, and S11 in Fig. 5, S31 and S32 in Fig. 7, and S81 and S82 in Fig. 11).

Further, according to the embodiment, the estimated thrust force (the stroke) is determined using the plant model by the processing performed by the stroke calculation portion 35 (Fig. 8), the processing performed by the pad temperature estimation portion 36 (Fig. 9), the processing performed by the pad stiffness learning portion 37 (Fig. 10), and the processing performed by the stroke estimated thrust force calculation portion 38 (Fig. 11). Further, according to the embodiment, the estimated thrust force (the stroke) is calculated based on a gain acquired from the "stroke" and the "pad stiffness learned value (more specifically, the pad stiffness after the temperature characteristic is taken into consideration)" (the relationship between the stroke change amount and the estimated thrust force (current) change amount). In the embodiment, the thrust force is determined to reach the target thrust force by detecting the increase in the voltage and converting the change amount of the stroke into the thrust force according to the plant model calculated based on the stiffness of the pad (the brake pads 6C), the rotor (the disk rotor 4), and the pressing member (the piston 6D). In this case, the thrust force is determined to reach the target thrust force using the value resulting from adding the estimated thrust force based on the amount of the change in the stroke made since the increase in the voltage to the estimated thrust force based on the current immediately before the increase in the voltage.

The brake system of the four-wheeled automobile according to the embodiment is configured in the above-described manner, and the operation thereof will be described next.

When the driver of the vehicle operates the brake pedal 9 by pressing it, this pressing force is transmitted to the master cylinder 12 via the booster 11, and the brake hydraulic pressure is generated by the master cylinder 12. The brake hydraulic pressure generated in the master cylinder 12 is supplied to each of the disk brakes 5 and 6 via the cylinder-side hydraulic pressure pipes 14A and 14B, the ESC 16, and the brake-side pipe portions 15A, 15B, 15C, and 15D, and the braking force is provided to each of the left and right front wheels 2 and the left and right rear wheels 3.

In this case, in each of the disk brakes 5 and 6, the piston 5B or 6D is slidably displaced toward the brake pads 6C according to an increase in the brake hydraulic pressure in the caliper 5A or 6B, and the brake pads 6C are pressed against the disk rotor 4 or 4. As a result, the braking force based on the brake hydraulic pressure is provided. On the other hand, when the brake operation is released, the supply of the brake hydraulic pressure into the caliper 5A or 6B is stopped, which causes the piston 5B or 6D to be displaced so as to separate (retract) from the disk rotor 4 or 4. As a result, the brake pads 6C separate from the disk rotor 4 or 4, and the vehicle is returned into a non-braked state.

Next, when the driver of the vehicle operates the parking brake switch 23 toward the braking side (the application side), power is supplied from the braking control apparatus 17 (the parking brake control apparatus 31) to the electric motor 7A of the rear wheel-side disk brake 6 on each of the left side and the right side, and the electric motor 7A is rotationally driven. On the rear wheel-side disk brake 6, the rotational motion of the electric motor 7A is converted into the linear motion by the rotation-linear motion conversion mechanism 8, and the piston 6D is thrust by the rotation-linear motion member 8A. As a result, the disk rotor 4 is pressed by the brake pads 6C. At this time, the rotation-linear motion conversion mechanism 8 (the liner motion member 8A2) is kept in the braking state with the aid of, for example, the frictional force (the holding force) due to the threaded engagement. As a result, the rear wheel-side disk brake 6 is actuated (applied) as the parking brake. In other words, even after the power supply to the electric motor 7A is stopped, the piston 6D is held at the braking position by the rotation-linear motion conversion mechanism 8.

On the other hand, when the driver operates the parking brake switch 23 toward the braking release side (the release side), power is supplied from the braking control apparatus 17 (the parking brake control apparatus 31) to the electric motor 7A so as to rotate the motor in the reverse direction. Due to this power supply, the electric motor 7A is rotated in the opposite direction from the direction at the time of the actuation of the parking brake (the application). At this time, the braking force maintained by the rotation-linear motion conversion mechanism 8 is released, which allows the piston 6D to be displaced in a direction away from the disk rotor 4. As a result, the actuation of the rear wheel-side disk brake 6 as the parking brake is stopped (released).

Now, according to the embodiment, if the current value changes according to the change in the voltage value applied to the electric motor 7A (if "NO" is determined in S93 in Fig. 12), the electric motor 7A is controlled (stopped) based on the estimated thrust force (the stroke). Therefore, the accuracy of the estimated thrust force (the stroke) compared to the actual thrust force can be ensured even when the current changes due to the change in the voltage. In other words, the estimated thrust force (the stroke) can be accurately determined even when the voltage increases. As a result, the thrust force can be prevented from falling short. In other words, the embodiment can allow the electric motor 7A to be controlled (stopped) with the required thrust force even when the current changes due to the change in the voltage, thereby preventing the vehicle from slipping down on the upslope road.

According to the embodiment, the parking brake control apparatus 31 determines that the current value changes according to the change in the voltage value based on the increase in the voltage value (S23 and S24 in Fig. 6), and determines that the current value does not change based on the convergence of the change in the current value (S27, S28, and S22 in Fig. 6). In this case, the parking brake control apparatus 31 determines that the current value does not change when the current value starts increasing after reducing (S28 and S22 in Fig. 6). Therefore, the parking brake control apparatus 31 can accurately determine whether the current value fluctuates (changes) due to the change in the voltage. The parking brake control apparatus 31 may determine that the current value does not change based on the fact that the gradient of the current value becomes gentle.

According to the embodiment, the parking brake control apparatus 31 determines that the current value changes according to the change in the voltage value based on the increases in the voltage and the current (S31, S33, and S34 in Fig. 7). Therefore, the parking brake control apparatus 31 can accurately determine that the current value changes according to the change in the voltage value.

According to the embodiment, the electric motor 7A is controlled (stopped) based on the estimated thrust force (the current) if the voltage value does not increase (if "YES" is determined in S93 in Fig. 12). Therefore, the electric motor 7A can be controlled based on the accurate estimated thrust force (the second estimated thrust force) acquired based on the current value when the voltage value does not increase.

According to the embodiment, the parking brake control apparatus 31 stops the power supply to the electric motor 7A when the estimated thrust force (the stroke) or the estimated thrust force (the current) reaches the target thrust force (S94, S96, and S95 in Fig. 12, and Fig. 13). Therefore, the electric motor 7A can be stopped with the required thrust force regardless of whether the voltage value increases or not. As a result, the thrust force can be prevented from falling short.

According to the embodiment, the electric motor 7A is not controlled (stopped) based on the estimated thrust force (the stroke) or the estimated thrust force (the current) before the estimated thrust force (the current) increases due to the increase in the current (S10, S12, and S11 in Fig. 5, S31 and S32 in Fig. 7, and S81 and S82 in Fig. 11). Therefore, the electric motor 7A can be prevented from being stopped based on the increase in the current value (for example, the inrush current) before the linear motion member 8A2 of the rotation-linear motion conversion mechanism 8 abuts against the brake pad 6C via the piston 6D serving as the pressing member. As a result, the thrust force can also be prevented from falling short by virtue of this effect.

According to the embodiment, the estimated thrust force (the stroke) is determined using the plant model. Therefore, the estimated thrust force (the stroke) can be accurately determined using the plant model.

According to the embodiment, the estimated thrust force (the stroke) is calculated based on the gain acquired from the stroke and the pad stiffness learned value (more specifically, the pad stiffness after the temperature characteristic is taken into consideration) (the relationship between the stroke change amount and the estimated thrust force (current) change amount). Therefore, the estimated thrust force (the stroke) can be accurately calculated based on the gain.

The embodiment has been described citing the example in which the stroke is used as the first physical amount corresponding to the electric motor rotational amount. However, the first physical amount is not limited thereto, and, for example, another physical amount corresponding to the electric motor rotational amount may be used as the first physical amount, or the electric motor rotational amount may be directly used.

The embodiment has been described citing the example in which the hydraulic disk brake equipped with the electric parking brake function is employed as the rear wheel-side disk brake 6, and, along therewith, the hydraulic disk brake unequipped with the electric parking brake function is employed as the front wheel-side disk brake 5. However, the rear wheel-side disk brake 6 and the front wheel-side disk brake 5 are not limited thereto, and, for example, the hydraulic disk brake unequipped with the electric parking brake function may be employed as the rear wheel-side disk brake 6, and, along therewith, the hydraulic disk brake equipped with the electric parking brake function may be employed as the front wheel-side disk brake 5. Further, the hydraulic disk brake equipped with the electric parking brake function may be employed as both the front wheel-side disk brake 5 and the rear wheel-side disk brake 6. In sum, the brakes on at least a pair of left and right wheels, among the wheels of the vehicle, can be constituted by the electric parking brake.

The embodiment has been described citing the hydraulic disk brake equipped with the electric parking brake as the electric brake (the electric brake mechanism) by way of example. However, the electric brake is not limited to the disk brake-type brake mechanism, and may be configured as a drum brake-type brake mechanism. Further examples of the configuration employable as the electric parking brake include various types of brake mechanisms, such as a drum-in disk brake in which a drum-type electric parking brake is provided to a disk brake, a cable puller-type electric parking brake that holds a parking brake by pulling a cable using an electric motor, and an electro-mechanical brake that controls a braking force directly by an electric motor. Alternatively, the electric brake (the electric brake mechanism) may be an electric disk brake including an electric caliper. In sum, the present invention can be applied to any electric brake that calculates a braking force based on a current value supplied to an electric motor, and can be widely applied to various types of electric brakes.

According to the above-described embodiment, if the current value changes according to the change in the voltage value applied to the electric motor, the electric motor is controlled based on the estimated thrust force (the first estimated thrust force) acquired from the first physical amount corresponding to the electric motor rotational amount acquired based on the current value and the voltage value supplied to the electric motor and the element regarding the stiffness including the stiffness of the braking member. Therefore, the accuracy of the estimated thrust force (the first estimated thrust force) compared to the actual thrust force can be ensured even when the current changes due to the change in the voltage. In other words, the estimated thrust force (the first estimated thrust force) can be accurately determined even when the voltage increases. As a result, the thrust force can be prevented from falling short.

According to the embodiment, the parking brake control apparatus 31 determines that the current value changes according to the change in the voltage value based on the increase in the voltage value, and determines that the current value does not change based on the convergence of the change in the current value. Therefore, the parking brake control apparatus 31 can accurately determine whether the current value fluctuates (changes) due to the change in the voltage.

According to the embodiment, the parking brake control apparatus 31 determines that the current value changes according to the change in the voltage value based on the increase in the voltage value, and determines that the current value does not change based on the fact that the gradient of the current value becomes gentle. Therefore, the parking brake control apparatus 31 can accurately determine whether the current value fluctuates (changes) due to the change in the voltage.

According to the embodiment, the parking brake control apparatus 31 determines that the current value changes according to the change in the voltage value based on the increase in the voltage value, and determines that the current value does not change when the current value starts increasing after reducing. Therefore, the parking brake control apparatus 31 can accurately determine whether the current value fluctuates (changes) due to the change in the voltage.

According to the embodiment, the parking brake control apparatus 31 determines that the current value changes according to the change in the voltage value based on the increases in the voltage and the current. Therefore, the parking brake control apparatus 31 can accurately determine that the current value changes according to the change in the voltage value.

According to the embodiment, if the voltage value does not increase, the electric motor is controlled based on the second estimated thrust force acquired based on the current value supplied to the electric motor. Therefore, the electric motor can be controlled based on the accurate estimated thrust force (the second estimated thrust force) acquired based on the current value when the voltage value does not increase.

According to the embodiment, the control apparatus stops the power supply to the electric motor when the first estimated thrust force or the second estimated thrust force reaches the target thrust force. Therefore, the electric motor can be stopped with the required thrust force regardless of whether the voltage value increases or not. As a result, the thrust force can be prevented from falling short.

According to the embodiment, the electric motor is not controlled based on the first estimated thrust force and the second estimated thrust force, before the load imposed on the electric motor increases due to the abutment of the electric mechanism with the braking member, and the second estimated thrust force increases due to the increase in the current value. Therefore, the electric motor can be prevented from being stopped based on the increase in the current value (for example, the inrush current) before the electric mechanism abuts against the braking member. As a result, the thrust force can also be prevented from falling short by virtue of this effect.

According to the embodiment, the first estimated thrust force is determined using the plant model. Therefore, the first estimated thrust force can be accurately determined using the plant model.

According to the embodiment, the first estimated thrust force is calculated based on the gain acquired from the first physical amount and the element regarding the stiffness including the stiffness of the braking member. Therefore, the first estimated thrust force can be accurately calculated based on the gain.

The present invention shall not be limited to the above-described embodiment, and includes various modifications. For example, the above-described embodiment has been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2022-052010 filed on March 28, 2022. The entire disclosure of Japanese Patent Application No. 2022-052010 filed on March 28, 2022 including the specification, the claims, the drawings, and the abstract is incorporated herein by reference in its entirety.

REFERENCE SIGNS LIST

4       disk rotor (braking target member)
6C      brake pad (braking member)
7A      electric motor
8       rotation-linear motion conversion mechanism (electric mechanism)
17      braking control apparatus (control apparatus)
31      parking brake control apparatus (control apparatus)

**Claims**

1.  An electric brake apparatus comprising:

    an electric mechanism configured to transmit a thrust force to a braking member in a direction toward a braking target member to provide a braking force, and hold the thrust force;
    an electric motor configured to transmit the thrust force to the electric mechanism; and
    a control apparatus configured to control the electric motor,
    wherein the control apparatus controls the electric motor based on a first estimated thrust force acquired from a first physical amount corresponding to an electric motor rotational amount acquired based on a current value and a voltage value supplied to the electric motor and an element regarding stiffness including stiffness of the braking member, when the current value changes according to a change in the voltage value applied to the electric motor.

2.  The electric brake apparatus according to claim 1, wherein the control apparatus determines that the current value changes according to the change in the voltage value based on an increase in the voltage value, and determines that the current value does not change according to convergence of a change in the current value.

3.  The electric brake apparatus according to claim 1, wherein the control apparatus determines that the current value changes according to the change in the voltage value based on an increase in the voltage value, and determines that the current value does not change based on a fact that a gradient of the current value becomes gentle.

4.  The electric brake apparatus according to claim 1, wherein the control apparatus determines that the current value changes according to the change in the voltage value based on an increase in the voltage value, and determines that the current value does not change when the current value starts increasing after reducing.

5.  The electric brake apparatus according to any of claims 1 to 4, wherein the control apparatus determines that the current value changes according to the change in the voltage value according to increases in the voltage and the current.

6.  The electric brake apparatus according to any of claims 1 to 5, wherein, when the voltage value does not increase, the control apparatus controls the electric motor based on a second estimated thrust force acquired based on the current value supplied to the electric motor.

7.  The electric brake apparatus according to claim 6, wherein the control apparatus stops power supply to the electric motor when the first estimated thrust force or the second estimated thrust force reaches a target thrust force.

8. The electric brake apparatus according to claim 6 or 7, wherein the control apparatus does not control the electric motor based on the first estimated thrust force or the second estimated thrust force, before a load imposed on the electric motor increases due to abutment of the electric mechanism with the braking member, and the second estimated thrust force increases due to an increase in the current value.

9. The electric brake apparatus according to any of claims 1 to 8, wherein the first estimated thrust force is determined using a plant model.

10. The electric brake apparatus according to any of claims 1 to 8, wherein the first estimated thrust force is calculated based on a gain acquired from the first physical amount and the element regarding the stiffness including the stiffness of the braking member.

11. An electric brake control method for controlling an electric motor by detecting a current value of the electric motor configured to provide a thrust force to a braking member, the electric brake control method comprising:
controlling the electric motor based on a first estimated thrust force acquired from a first physical amount corresponding to an electric motor rotational amount acquired based on the current value and a voltage value supplied to the electric motor and an element regarding stiffness including stiffness of the braking member, when the current value changes according to a change in the voltage value applied to the electric motor.

12. A control apparatus configured to control an electric motor by detecting a current value of the electric motor configured to provide a thrust force to a braking member,
wherein the control apparatus controls the electric motor based on a first estimated thrust force acquired from a first physical amount corresponding to an electric motor rotational amount acquired based on the current value and a voltage value supplied to the electric motor and an element regarding stiffness including stiffness of the braking member, when the current value changes according to a change in the voltage value applied to the electric motor.

FIG. 1

FIG. 2

FIG. 3

# FIG. 4

PARKING BRAKE CONTROL APPARATUS — 31A

LEFT-SIDE PROCESSING PORTION

a
b
c
d
e
f

LOAD INCREASE DETECTION PORTION — 32
g

CURRENT CHANGE DETECTION PORTION — 33
h

CURRENT-BASED ESTIMATED THRUST FORCE CALCULATION PORTION — 34
i

STROKE CALCULATION PORTION — 35
j

PAD TEMPERATURE ESTIMATION PORTION — 36
k

PAD STIFFNESS LEARNING PORTION — 37
l
m

STROKE-BASED ESTIMATED THRUST FORCE CALCULATION PORTION — 38
n

APPLICATION COMPLETION DETERMINATION PORTION — 39

MOTOR DRIVING SIGNAL CALCULATION PORTION — 40
p

o

42  1/Z

41  1/Z

31
(17)

a: APPLICATION/RELEASE REQUEST
b: CURRENT
c: VOLTAGE
d: WC PRESSURE

e: WHEEL SPEED
f: AMBIENT TEMPERATURE
g: LOAD INCREASE DETECTION FLAG
h: CURRENT CHANGE DETECTION FLAG

i: ESTIMATED THRUST FORCE (CURRENT)
j: STROKE
k: PAD TEMPERATURE ESTIMATED VALUE
l: PAD STIFFNESS LEARNED VALUE

m: PAD STIFFNESS ALREADY LEARNED FLAG
n: ESTIMATED THRUST FORCE (STROKE)
o: APPLICATION COMPLETION FLAG
p: MOTOR DRIVING SIGNAL

EP 4 501 722 A1

# FIG. 5

START

S1 — MOTOR DRIVING SIGNAL (PREVIOUS VALUE) = APPLY OR MBK AFTER APPLY? — NO

YES

S4 — LOAD INCREASE DETECTION FLAG = ON? — NO

YES

S6 — CALCULATE GRADIENT OF CURRENT

S2 — INRUSH CURRENT DETECTION FLAG = OFF

S7 — INRUSH CURRENT DETECTION FLAG = ON? — NO

YES

S8 — GRADIENT OF CURRENT ≤ CURRENT GRADIENT THRESHOLD VALUE 1? — NO

YES

S9 — INRUSH CURRENT DETECTION FLAG = ON

S10 — GRADIENT OF CURRENT ≥ CURRENT THRESHOLD VALUE 2? — NO

YES

S12 — CURRENT ≥ MAXIMUM NO-LOAD CURRENT? — NO

YES

S5 — LOAD INCREASE DETECTION FLAG = PREVIOUS VALUE

S11 — LOAD INCREASE DETECTION FLAG = ON

S3 — LOAD INCREASE DETECTION FLAG = OFF

END

EP 4 501 722 A1

# FIG. 6

START

**S21**
MOTOR DRIVING SIGNAL (PREVIOUS VALUE) = APPLY OR MBK AFTER APPLY? — NO

YES

**S23**
DOES VOLTAGE INCREASE FOR PREDETERMINED TIME? — NO

YES

**S25**
CURRENT CHANGE DETECTION FLAG = ON? — NO

YES

**S27**
IS GRADIENT OF CURRENT PREDETERMINED TIME AGO REDUCTION GRADIENT? — NO

YES

**S28**
IS PRESENT GRADIENT OF CURRENT INCREASE GRADIENT? — NO

YES

**S24**
CURRENT CHANGE DETECTION FLAG = ON

**S26**
CURRENT CHANGE DETECTION FLAG = PREVIOUS VALUE

**S22**
CURRENT CHANGE DETECTION FLAG = OFF

END

EP 4 501 722 A1

# FIG. 7

START

**S 3 1**

LOAD INCREASE DETECTION FLAG = ON? — **N O**

**Y E S**

**S 3 3**

CURRENT CHANGE DETECTION FLAG = OFF? — **N O**

**Y E S**

**S 3 4**

CALCULATE ESTIMATED THRUST FORCE (CURRENT)

**S 3 2**

ESTIMATED THRUST FORCE (CURRENT) = 0

**S 3 5**

ESTIMATED THRUST FORCE (CURRENT) = VALUE WHEN CHANGE IN CURRENT IS DETECTED

END

EP 4 501 722 A1

FIG. 8

START

**S 4 1**
CALCULATE MOTOR ROTATIONAL
SPEED

**S 4 2**
LOAD INCREASE DETECTION FLAG
= ON?    **NO**

**YES**    **S 4 3**
INTEGRATE MOTOR ROTATIONAL SPEED

**S 4 5**
MOTOR ROTATIONAL SPEED
INTEGRATED VALUE = 0

**S 4 4**
CALCULATE STROKE
(CONVERT MOTOR ROTATIONAL SPEED
INTEGRATED VALUE INTO STROKE)

**S 4 6**
STROKE = 0

END

# FIG. 9

START

**S 5 1**

CALCULATE TEMPERATURE
INCREASE ESTIMATED VALUE

**S 5 2**

PAD TEMPERATURE >
AMBIENT TEMPERATURE? — **NO**

**YES**

**S 5 3**

CALCULATE HEAT LOSS TEMPERATURE
ESTIMATED VALUE

**S 5 5**

HEAT LOSS TEMPERATURE
ESTIMATED VALUE = 0

**S 5 4**

CALCULATE PAD TEMPERATURE
ESTIMATED VALUE

END

# FIG. 10

START

S 6 1

MOTOR DRIVING SIGNAL
(PREVIOUS VALUE)
= APPLY OR MBK AFTER APPLY?

**NO**

**YES**

S 6 5

CURRENT CHANGE DETECTION FLAG
= OFF?

**NO**

**YES**

S 6 6

PAD STIFFNESS ALREADY LEARNED FLAG
= OFF?

**NO**

**YES**

S 6 7

LOAD INCREASE DETECTION FLAG
= ON?

**NO**

**YES**

S 6 8

CALCULATE WC PRESSURE
CHANGE AMOUNT

S 6 9

WC PRESSURE CHANGE AMOUNT
= 0

S 7 0

IS WC PRESSURE CHANGE AMOUNT EQUAL TO
OR SMALLER THAN PREDETERMINED VALUE?

**NO**

**YES**

S 7 1

THRUST FORCE CONVERTED VALUE OF WC PRESSURE
< ESTIMATED THRUST FORCE (CURRENT)?

**NO**

**YES**

S 7 2

KEPT FOR
PREDETERMINED TIME?

**NO**

S 7 6

APPLICATION COMPLETION FLAG
(PREVIOUS VALUE)
= ON?

**NO**

**YES**

**YES**

S 7 3

CALCULATE PAD STIFFNESS
LEARNED VALUE

S 6 2

PAD STIFFNESS LEARNED VALUE
= PREVIOUS VALUE

S 7 4

LATCH PAD TEMPERATURE ESTIMATED VALUE
(CALCULATE PAD TEMPERATURE ESTIMATED
VALUE (LEARNED VALUE)

S 6 3

PAD TEMPERATURE ESTIMATED
VALUE (LEARNED VALUE)
= PREVIOUS VALUE

S 7 5

PAD STIFFNESS ALREADY LEARNED FLAG
= ON

S 6 4

PAD STIFFNESS ALREADY LEARNED FLAG
= PREVIOUS VALUE

END

37

# FIG. 11

START

**S 8 1**

LOAD INCREASE DETECTION FLAG
= ON? — **NO**

**YES**

**S 8 3**

CURRENT CHANGE DETECTION FLAG
= ON? — **NO**

**YES** **S 8 4**

CURRENT CHANGE DETECTION FLAG
(PREVIOUS VALUE)
= OFF? — **NO**

**YES** **S 8 5**

LATCH ESTIMATED THRUST FORCE
(CURRENT) PREDETERMINED
TIME AGO

**S 8 6**

LATCH STROKE PREDETERMINED
TIME AGO

**S 8 7**

CALCULATE STROKE INCREASE
AMOUNT SINCE CHANGE
IN CURRENT

**S 8 8**

CALCULATE PAD STIFFNESS AFTER TEMPERATURE
CHARACTERISTIC IS TAKEN INTO CONSIDERATION
(CALCULATE IT BASED ON PAD STIFFNESS
LEARNED VALUE, AND PAD TEMPERATURE
ESTIMATED VALUE AND PAD TEMPERATURE
ESTIMATED VALUE (LEARNED VALUE))

**S 8 2**

ESTIMATED THRUST FORCE
(STROKE) = 0

**S 8 9**

CALCULATE ESTIMATED THRUST
FORCE (STROKE) WITH RESPECT TO
STROKE INCREASE AMOUNT

END

# FIG. 12

# FIG. 13

APPLY RELEASE REQUEST
= APPLY

APPLY

APPLICATION
COMPLETION FLAG
= ON

DE-ACTUATE

MBK AFTER APPLY
(MOTOR BRAKE)

IS MOTOR ROTATIONAL SPEED
≤ THRESHOLD VALUE
MAINTAINED FOR
PREDETERMINED TIME?

# FIG. 14

| MOTOR DRIVING SIGNAL | OPERATION OF DRIVING CIRCUIT (DRIVER) |
|---|---|
| DE-ACTUATE | OPEN MOTOR TERMINAL |
| APPLY (APPLICATION) | APPLY VOLTAGE IN APPLICATION DIRECTION |
| MBK AFTER APPLY (MOTOR BRAKE AFTER APPLICATION) | SHORT MOTOR TERMINAL |

# FIG. 15

APPLY

OFF     APPLY     MOTOR BRAKE     OFF

CURRENT

PADS ABUT
AGAINST ROTOR

ROTATION-LINEAR
MOTION MECHANISM
ABUTS AGAINST PISTON

APPLICATION IS
COMPLETED

TIME

# FIG. 16

VOLTAGE

VOLTAGE INCREASES

CURRENT

CURRENT ALSO INCREASES
ACCORDING TO INCREASE
IN VOLTAGE

THRUST
FORCE

TARGET THRUST FORCE

ESTIMATED
THRUST FORCE

APPLICATION IS COMPLETED BASED ON
ESTIMATED THRUST FORCE INCREASED
DUE TO INCREASE IN CURRENT

ACTUAL THRUST FORCE DOES NOT INCREASE
⇒THRUST FORCE IS INSUFFICIENT

ACTUAL THRUST FORCE

MOTOR
ROTATIONAL
SPEED

AFTER SLOWING DOWN ACCORDING TO INCREASE IN
THRUST FORCE, ROTATIONAL SPEED INCREASES
DUE TO INCREASE IN VOLTAGE (MOTOR IS SPED UP)

TIME

EP 4 501 722 A1

# FIG. 17

VOLTAGE

CURRENT

BOTH VOLTAGE AND CURRENT INCREASE

CURRENT REDUCES TO VALUE ACCORDING TO LOAD

FLAG

CHANGE IN CURRENT IS ONGOING

ESTIMATED THRUST FORCE ESTIMATED BASED ON CURRENT

ESTIMATED THRUST FORCE ESTIMATED BASED ON STROKE

ADD ESTIMATED THRUST FORCE IMMEDIATELY BEFORE INCREASE IN VOLTAGE

USE ESTIMATED THRUST FORCE ESTIMATED BASED ON STROKE ONLY WHILE CURRENT CHANGES

TARGET THRUST FORCE

ESTIMATED THRUST FORCE ≥ TARGET THRUST FORCE ⇒APPLICATION IS COMPLETED

ESTIMATED THRUST FORCE TO BE USED TO DETERMINE COMPLETION OF APPLICATION

ESTIMATED THRUST FORCE ESTIMATED BASED ON CURRENT

TIME

EP 4 501 722 A1

| | |
|---|---|
| **INTERNATIONAL SEARCH REPORT** | International application No.<br><br>**PCT/JP2023/009214** |

**A.    CLASSIFICATION OF SUBJECT MATTER**

**B60T 13/74**(2006.01)i; **B60T 8/00**(2006.01)i
FI:    B60T8/00 Z; B60T13/74 G

According to International Patent Classification (IPC) or to both national classification and IPC

**B.    FIELDS SEARCHED**

Minimum documentation searched (classification system followed by classification symbols)

B60T13/74; B60T8/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-20507 A (HITACHI AUTOMOTIVE SYSTEMS, LTD.) 18 February 2021 (2021-02-18)<br>    entire text, all drawings | 1-12 |
| A | JP 2019-130939 A (HITACHI AUTOMOTIVE SYSTEMS, LTD.) 08 August 2019 (2019-08-08)<br>    entire text, all drawings | 1-12 |
| A | JP 2012-159134 A (HITACHI AUTOMOTIVE SYSTEMS, LTD.) 23 August 2012 (2012-08-23)<br>    entire text, all drawings | 1-12 |
| A | WO 2021/246124 A1 (HITACHI ASTEMO, LTD.) 09 December 2021 (2021-12-09)<br>    entire text, all drawings | 1-12 |
| A | US 2021/0024044 A1 (MANDO CORP.) 28 January 2021 (2021-01-28)<br>    entire text, all drawings | 1-12 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/009214**

| Patent document cited in search report | | | Publication date (day/month/year) | Patent family member(s) | | | Publication date (day/month/year) |
|---|---|---|---|---|---|---|---|
| JP | 2021-20507 | A | 18 February 2021 | (Family: none) | | | |
| JP | 2019-130939 | A | 08 August 2019 | (Family: none) | | | |
| JP | 2012-159134 | A | 23 August 2012 | US | 2012/0193177 | A1 | |
| | | | | entire text, all drawings | | | |
| WO | 2021/246124 | A1 | 09 December 2021 | JP | 2021-187381 | A | |
| | | | | entire text, all drawings | | | |
| US | 2021/0024044 | A1 | 28 January 2021 | DE | 102020208950 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020050073 A
- JP 2022052010 A